(19) Europäisches Patentamt
European Patent Office
Office européen des brevets

(11) **EP 4 603 996 A1**

(12) **EUROPEAN PATENT APPLICATION**
published in accordance with Art. 153(4) EPC

(43) Date of publication:
**20.08.2025 Bulletin 2025/34**

(21) Application number: **23899561.7**

(22) Date of filing: **25.09.2023**

(51) International Patent Classification (IPC):
*G06F 21/57* (2013.01)

(52) Cooperative Patent Classification (CPC):
**G06F 21/57; G06F 21/74**

(86) International application number:
**PCT/CN2023/121076**

(87) International publication number:
**WO 2024/119978 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.12.2022 CN 202211571870**
**31.03.2023 CN 202310382703**

(71) Applicant: **Huawei Technologies Co., Ltd.**
**Shenzhen, Guangdong 518129 (CN)**

(72) Inventors:
• **WANG, Chenyu**
**Shenzhen, Guangdong 518129 (CN)**
• **WAN, Rongfei**
**Shenzhen, Guangdong 518129 (CN)**
• **ZHANG, Yu**
**Shenzhen, Guangdong 518129 (CN)**
• **YAN, Minrui**
**Shenzhen, Guangdong 518129 (CN)**
• **WANG, Tao**
**Shenzhen, Guangdong 518129 (CN)**
• **ZHENG, Ziyong**
**Shenzhen, Guangdong 518129 (CN)**
• **JIN, Yier**
**Shenzhen, Guangdong 518129 (CN)**

(74) Representative: **Huawei European IPR**
**Huawei Technologies Duesseldorf GmbH**
**Riesstraße 25**
**80992 München (DE)**

(54) **METHOD AND APPARATUS FOR CREATING HETEROGENEOUS TRUSTED EXECUTION ENVIRONMENT, AND COMPUTING SYSTEM**

(57) A method for creating a heterogeneous trusted execution environment, an apparatus, and a computing system are provided, and relate to the field of computer technologies, to cover more comprehensive confidential computing scenarios, and achieve good applicability. The method is applied to a computing device including a first processor and a second processor that are heterogeneous. The first processor creates a first security isolation entity based on a computing resource of the first processor; the first processor sends a first creation request to the second processor; the second processor creates a second security isolation entity based on a computing resource of the second processor in response to the first creation request; the first processor performs integrity measurement on the second security isolation entity on a side of the second processor; and the second processor performs integrity measurement on the first security isolation entity on a side of the first processor

FIG. 2

# Description

This application claims priority to Chinese Patent Application No. 202211571870.5, filed with the China National Intellectual Property Administration on December 8, 2022 and entitled "CONFIDENTIAL COMPUTING SYSTEM", and to Chinese Patent Application No. 202310382703.4, filed with the China National Intellectual Property Administration on March 31, 2023 and entitled "METHOD FOR CREATING HETEROGENEOUS TRUSTED EXECUTION ENVIRONMENT, APPARATUS, AND COMPUTING SYSTEM", both of which are incorporated herein by reference in their entireties.

## TECHNICAL FIELD

Embodiments of this application relate to the field of computer technologies, and in particular, to a method for creating a heterogeneous trusted execution environment, an apparatus, and a computing system.

## BACKGROUND

Confidential computing is implemented based on a trusted execution environment (trusted execution environment, TEE) with hardware isolation. Based on the TEE, a security isolation entity (for example, a virtual machine) is created on a device, so that a plurality of devices communicate with each other via security isolation entities created by the devices. Currently, security isolation entities are mainly created based on computing devices of different chip vendors (for example, CPUs produced by different vendors).

With development of artificial intelligence technologies represented by machine learning and a deep neural network, parallel computing of large-scale data needs to be performed, and a heterogeneous computing architecture including a CPU and an accelerator (for example, a GPU or an NPU) emerges. The CPU may deliver a computing task to the accelerator, and the accelerator completes the computing task. When confidential computing is performed in the heterogeneous computing architecture, the CPU and the accelerator separately create security isolation entities, and perform transmission of confidential data based on the security isolation entities.

However, based on the conventional technology, a CPU is a main control unit of a computing device. The CPU provides data, and after determining that a security isolation entity created by an accelerator is trusted, the CPU delivers the data to the accelerator to complete confidential computing. With progress of technologies, confidential computing in the heterogeneous computing architecture needs to cover more comprehensive computing scenarios, and therefore faces more challenges.

## SUMMARY

Embodiments of this application provide a method for creating a heterogeneous trusted execution environment, an apparatus, and a computing system, to cover more comprehensive confidential computing scenarios and achieve good applicability.

To achieve the foregoing objectives, the following technical solutions are used in embodiments of this application.

According to a first aspect, an embodiment of this application provides a method for creating a heterogeneous trusted execution environment, applied to a computing device including a first processor and a second processor that are heterogeneous. The method includes: The first processor creates a first security isolation entity based on a computing resource of the first processor, and sends a first creation request to the second processor. The second processor creates a second security isolation entity based on a computing resource of the second processor in response to the first creation request. Further, the first processor performs integrity measurement on the second security isolation entity on a side of the second processor, and the second processor performs integrity measurement on the first security isolation entity on a side of the first processor.

In the method for creating a heterogeneous trusted execution environment provided in this embodiment of this application, both the first processor and the second processor may perform integrity measurement on the first security isolation entity created on peer sides of the first processor and the second processor. In this way, both the first processor and the second processor may provide information used for confidential computing. In other words, the method is applicable to a scenario in which the first processor provides confidential data and/or the second processor provides confidential data, that is, the method can cover more comprehensive confidential computing scenarios, and achieve good applicability.

In a possible implementation, the first processor is a central processing unit CPU, and the second processor is an artificial intelligence AI accelerator.

In a possible implementation, the method for creating a heterogeneous trusted execution environment provided in this embodiment of this application further includes: The first processor sets an access control policy, where the access control policy includes a first outbound access permission table and a first inbound access permission table. The first outbound access permission table is used to perform permission check on an access request for accessing the second security isolation entity by the first security isolation entity, and the first inbound access permission table is used to perform permission check on an access request for accessing the first security isolation entity by the second security isolation entity.

In a possible implementation, the method for creating a heterogeneous trusted execution environment provided in this embodiment of this application further includes: The second processor sets an access control policy, where the access control policy includes a second outbound access permission table and a second inbound access permission table. The second outbound access permission table is used to perform permission check on an access request for accessing the first security isolation entity by the second security isolation entity, and the second inbound access permission table is used to perform permission check on an access request for accessing the second security isolation entity by the first security isolation entity.

In a possible implementation, that the first processor performs integrity measurement on the second security isolation entity on the side of the second processor includes: The first processor sends a first measurement request to the second processor, where the first measurement request is used to request to measure integrity of the second security isolation entity on the side of the second processor; and the second processor sends a first measurement value to the first processor, where the first measurement value is a measurement value of the second security isolation entity on the side of the second processor; and performs integrity measurement on the second security isolation entity on the side of the second processor based on the first measurement value.

In a possible implementation, that the second processor performs integrity measurement on the first security isolation entity on the side of the first processor includes: The second processor sends a second measurement request to the first processor, where the second measurement request is used to request to measure integrity of the first security isolation entity on the side of the first processor; and the first processor sends a second measurement value to the second processor, where the second measurement value is a measurement value of the first security isolation entity on the side of the first processor; and performs integrity measurement on the first security isolation entity on the side of the first processor based on the second measurement value.

In a possible implementation, the method for creating a heterogeneous trusted execution environment provided in this embodiment of this application further includes: The first processor performs key agreement with the second processor to generate a first session key, where the first session key is used to encrypt and decrypt confidential data in a confidential communication process.

In this embodiment of this application, after the first processor interacts with the second processor to create the first security isolation entity and the second security isolation entity, the first security isolation entity and the second security isolation entity perform confidential communication. The first security isolation entity can defend against an attack performed in a software manner, that is, it can be ensured that confidential data is not listened to or tampered with by using a software-based method. However, data may be intercepted or tampered with by an attacker by using a physical method (for example, by using a probe). Therefore, the first processor and the second processor perform key agreement to generate the first session key to encrypt and decrypt the confidential data in the confidential communication process. In this way, security of confidential computing can be improved.

In a possible implementation, the computing resources of the first processor and the second processor are divided into a plurality of resource slices, and the plurality of resource slices include a secure-state resource slice and a non-secure-state resource slice; and computing resources used to create the first security isolation entity and the second security isolation entity are secure-state resource slices.

In this embodiment of this application, a security isolation entity created based on one resource slice of a processor is not created based on all resources of the processor. Therefore, another resource slice of the processor may be used to create another security isolation entity, so that a resource of the processor can be fully utilized, to improve resource utilization of the processor

In a possible implementation, the computing device further includes a third processor. The method for creating a heterogeneous trusted execution environment provided in this embodiment of this application further includes: The third processor creates a third security isolation entity; then the first processor performs integrity measurement on the third security isolation entity on a side of the third processor; and the third processor performs integrity measurement on the first security isolation entity on the side of the first processor.

In a possible implementation, the third processor is an AI accelerator.

According to the method for creating a heterogeneous trusted execution environment provided in this embodiment of this application, security isolation entities used for confidential communication may be flexibly created between a plurality of processors according to a requirement. For example, security isolation entities for confidential communication are created between one CPU and two AI accelerators.

In a possible implementation, the method for creating a heterogeneous trusted execution environment provided in this embodiment of this application further includes: The first processor performs key agreement with the third processor to generate a second session key; and the first processor encrypts the first session key by using the second session key, and sends the encrypted first session key to the third processor.

In a possible implementation, the method for creating a heterogeneous trusted execution environment provided in this embodiment of this application further includes: The third processor sets an access control policy, where the access control policy includes a third outbound access permission table and a third inbound access permission table. The third outbound access permission table is used to perform permission check on an access request for accessing the first security isolation entity by the third security isolation entity, and the third inbound access permission table is used to perform permission check on an access request for accessing the third security isolation entity by the first security isolation entity.

In a possible implementation, the method for creating a heterogeneous trusted execution environment provided in this embodiment of this application further includes: The first processor updates the access control policy, where an access control policy obtained through update by the first processor includes a fourth outbound access permission table and a fourth inbound access permission table. The fourth outbound access permission table is used to perform permission check on an access request for accessing the third security isolation entity by the first security isolation entity, and the fourth inbound access permission table is used to perform permission check on an access request for accessing the first security isolation entity by the third security isolation entity.

In a possible implementation, the computing device further includes a fourth processor. The method for creating a heterogeneous trusted execution environment provided in this embodiment of this application further includes: The fourth processor creates a fourth security isolation entity; the second processor creates a fifth security isolation entity; the fourth processor performs integrity measurement on the fifth security isolation entity on the side of the second processor; and the second processor performs integrity measurement on the fourth security isolation entity on a side of the fourth processor.

In a possible implementation, the method for creating a heterogeneous trusted execution environment provided in this embodiment of this application further includes: The third processor creates a sixth security isolation entity; then the fourth processor performs integrity measurement on the sixth security isolation entity on the side of the third processor; and the third processor performs integrity measurement on the fourth security isolation entity on the side of the fourth processor.

In a possible implementation, the fourth processor is a CPU.

According to the method for creating a heterogeneous trusted execution environment provided in this embodiment of this application, security isolation entities used for confidential communication may be flexibly created between a plurality of processors according to a requirement. For example, security isolation entities for confidential communication are created between two CPUs and two AI accelerators.

In a possible implementation, the method for creating a heterogeneous trusted execution environment provided in this embodiment of this application further includes: The fourth processor sets an access control policy, where the access control policy includes a fifth outbound access permission table and a fifth inbound access permission table. The fifth outbound access permission table is used to perform permission check on an access request for accessing the second security isolation entity by the fourth security isolation entity. The fifth inbound access permission table is used to perform permission check on an access request for accessing the fourth security isolation entity by the fifth security isolation entity.

In a possible implementation, the method for creating a heterogeneous trusted execution environment provided in this embodiment of this application further includes: That the second processor sets an access control policy includes: The first AI accelerator generates the access control policy, where the access control policy includes a sixth outbound access permission table and a sixth inbound access permission table. The sixth outbound access permission table is used to perform permission check on an access request for accessing the fourth security isolation entity by the fifth security isolation entity, and the sixth inbound access permission table is used to perform permission check on an access request for accessing the fifth security isolation entity by the fourth security isolation entity.

In a possible implementation, the method for creating a heterogeneous trusted execution environment provided in this embodiment of this application further includes: The fourth processor updates the access control policy, where an access control policy obtained through update by the fourth processor includes a seventh outbound access permission table and a seventh inbound access permission table. The seventh outbound access permission table is used to perform permission check on an access request for accessing the sixth security isolation entity by the fourth security isolation entity, and the seventh inbound access permission table is used to perform permission check on an access request for accessing the fourth security isolation entity by the sixth security isolation entity.

In a possible implementation, the method for creating a heterogeneous trusted execution environment provided in this embodiment of this application further includes: The third processor sets an access control policy, where the access control policy includes an eighth outbound access permission table and an eighth inbound access permission table. The eighth outbound access permission table is used to perform permission check on an access request for accessing the fourth security isolation entity by the sixth security isolation entity, and the eighth inbound access permission table is used to perform permission check on an access request for accessing the sixth security isolation entity by the fourth security isolation entity.

In a possible implementation, the method for creating a heterogeneous trusted execution environment provided in this embodiment of this application further includes: The fourth processor performs key agreement with the second processor to generate a third session key, where the third session key is used to encrypt and decrypt confidential data in a confidential communication process; the fourth processor performs key agreement with the third processor to generate a fourth session key; and the fourth processor encrypts the third session key by using the fourth session key, and sends the encrypted third session key to the third processor.

In a possible implementation, the method for creating a heterogeneous trusted execution environment provided in this embodiment of this application further includes: The first processor releases the first security isolation entity; the first processor sends a release instruction to the second processor, where the release instruction instructs to release the second security isolation entity that is on the side of the second processor and that communicates with the first security isolation entity; and the second processor releases the second security isolation entity in response to the release instruction.

That the first processor releases the first security isolation entity includes: The first processor deletes data and an access control policy that correspond to the first security isolation entity. Optionally, the first CPU may set a state of the resource slice for creating the first security isolation entity to a non-secure state. That the second processor releases the second security isolation entity includes: The second processor deletes data and an access control policy that correspond to the second security isolation entity. Optionally, the second processor may also set a state of the resource slice for creating the second security isolation entity to the non-secure state.

The first processor and the second processor respectively release the security isolation entities created by the first processor and the second processor. In this way, subsequently, the resource slice of the first processor may be used by the first processor to create another security isolation entity, and the resource slice of the second processor may also be used to create another security isolation entity for a creation request that is sent by the first processor or another processor and that is used to create the another security isolation entity.

According to a second aspect, an embodiment of this application provides a computing system, including a first processor and a second processor that are heterogeneous. The first processor includes a first security management module and a first trusted measurement module, and the second processor includes a second security management module and a second trusted measurement module. The first security management module is configured to create a first security isolation entity based on a computing resource of the first processor, and send a first creation request to the second security management module. The second security management module is configured to create a second security isolation entity based on a computing resource of the second processor in response to the first creation request. The first trusted measurement module is configured to perform integrity measurement on the second security isolation entity on a side of the second processor. The first trusted measurement module is configured to perform integrity measurement on the first security isolation entity on a side of the first processor.

In a possible implementation, the first security management module is further configured to set an access control policy, where the access control policy includes a first outbound access permission table and a first inbound access permission table, the first outbound access permission table is used to perform permission check on an access request for accessing the second security isolation entity by the first security isolation entity, and the first inbound access permission table is used to perform permission check on an access request for accessing the first security isolation entity by the second security isolation entity.

In a possible implementation, the second security management module is further configured to set an access control policy, where the access control policy includes a second outbound access permission table and a second inbound access permission table. The second outbound access permission table is used to perform permission check on an access request for accessing the first security isolation entity by the second security isolation entity, and the second inbound access permission table is used to perform permission check on an access request for accessing the second security isolation entity by the first security isolation entity.

In a possible implementation, the first trusted measurement module is specifically configured to send a first measurement request to the second trusted measurement module, where the first measurement request is used to request to measure integrity of the second security isolation entity on the side of the second processor. The second trusted measurement module is further configured to send a first measurement value to the first trusted measurement module where the first measurement value is a measurement value of the second security isolation entity on the side of the second processor. The first trusted measurement module is specifically configured to perform integrity measurement on the second security isolation entity on the side of the second processor based on the first measurement value.

In a possible implementation, the second trusted measurement module is specifically configured to send a second measurement request to the first trusted measurement module, where the second measurement request is used to request to measure integrity of the first security isolation entity on the side of the first processor. The first trusted measurement module is further configured to send a second measurement value to the second trusted measurement module, where the second measurement value is a measurement value of the first security isolation entity on the side of the first processor. The second trusted measurement module is specifically configured to perform integrity measurement on the first security isolation entity on the side of the first processor based on the second measurement value.

In a possible implementation, the first security management module is configured to perform key agreement with the second security management module to generate a first session key, where the first session key is used to encrypt and decrypt confidential data in a confidential communication process.

In a possible implementation, the computing system provided in this embodiment of this application further includes a third processor, and the third processor includes a third security management module and a third trusted measurement module. The third security management module is configured to create a third security isolation entity. The first trusted measurement module is further configured to perform integrity measurement on the third security isolation entity on the side of the third processor; and the third trusted measurement module is configured to perform integrity measurement on the first security isolation entity on the side of the first processor.

In a possible implementation, the third security management module is further configured to perform key agreement with the first security management module to generate a second session key. The first security management module is further configured to encrypt the first session key by using the second session key, and send the encrypted first session key to the third security management module.

In a possible implementation, the computing system provided in this embodiment of this application further includes a fourth processor, and the fourth processor includes a fourth security management module and a fourth trusted measurement module. The fourth security management module is configured to create a fourth security isolation entity; the second security management module is further configured to create a fifth security isolation entity; the fourth trusted measurement module is configured to perform integrity measurement on the fifth security isolation entity on the side of the second processor; and the second trusted measurement module is further configured to perform integrity measurement on the fourth security isolation entity on a side of the fourth processor.

In a possible implementation, the third security management module is further configured to create a sixth security isolation entity; the fourth trusted measurement module is further configured to perform integrity measurement on the sixth security isolation entity on the side of the third processor; and the third trusted measurement module is further configured to perform integrity measurement on the fourth security isolation entity on the side of the fourth processor.

In a possible implementation, the first security management module is further configured to update the access control policy, where an access control policy obtained through update by the first processor includes a fourth outbound access permission table and a fourth inbound access permission table. The fourth outbound access permission table is used to perform permission check on an access request for accessing the third security isolation entity by the first security isolation entity, and the fourth inbound access permission table is used to perform permission check on an access request for accessing the first security isolation entity by the third security isolation entity.

In a possible implementation, the third security management module is further configured to set an access control policy, where the access control policy includes a third outbound access permission table and a third inbound access permission table. The third outbound access permission table is used to perform permission check on an access request for accessing the first security isolation entity by the third security isolation entity, and the third inbound access permission table is used to perform permission check on an access request for accessing the third security isolation entity by the first security isolation entity.

In a possible implementation, the fourth security management module is further configured to set an access control policy, where the access control policy includes a fifth outbound access permission table and a fifth inbound access permission table. The fifth outbound access permission table is used to perform permission check on an access request for accessing the second security isolation entity by the fourth security isolation entity. The fifth inbound access permission table is used to perform permission check on an access request for accessing the fourth security isolation entity by the fifth security isolation entity.

In a possible implementation, the second security management module is further configured to set an access control policy, where the access control policy includes: generating, by a first AI accelerator, the access control policy, where the access control policy includes a sixth outbound access permission table and a sixth inbound access permission table. The sixth outbound access permission table is used to perform permission check on an access request for accessing the fourth security isolation entity by the fifth security isolation entity, and the sixth inbound access permission table is used to perform permission check on an access request for accessing the fifth security isolation entity by the fourth security isolation entity.

In a possible implementation, the fourth security management module is further configured to update the access control policy, where an access control policy obtained through update by the fourth processor includes a seventh outbound access permission table and a seventh inbound access permission table. The seventh outbound access permission table is used to perform permission check on an access request for accessing the sixth security isolation entity by the fourth security isolation entity, and the seventh inbound access permission table is used to perform permission check on an access request for accessing the fourth security isolation entity by the sixth security isolation entity.

In a possible implementation, the third security management module is further configured to set an access control policy, where the access control policy includes an eighth outbound access permission table and an eighth inbound access permission table. The eighth outbound access permission table is used to perform permission check on an access request for accessing the fourth security isolation entity by the sixth security isolation entity, and the eighth inbound access permission table is used to perform permission check on an access request for accessing the sixth security isolation entity by the fourth security isolation entity.

In a possible implementation, the fourth processor further includes a fourth security management module. The fourth security management module is configured to perform key agreement with the second security management module to generate a third session key, where the third session key is used to encrypt and decrypt confidential data in a confidential communication process. The fourth security management module is further configured to: perform key agreement with the third security management module to generate a fourth session key; encrypt the third session key by using the fourth session key; and send the encrypted third session key to the third processor.

In a possible implementation, the first security management module is further configured to release the first security isolation entity, and send a release instruction to the second processor, where the release instruction instructs to release the second security isolation entity that is on the side of the second processor and that communicates with the first security isolation entity, and the second security management module releases the second security isolation entity in response to the release instruction.

According to a third aspect, an embodiment of this application provides a computing device, including a memory and at least one processor connected to the memory. The memory is configured to store computer program code, the computer program code includes computer instructions, and when the computer instructions are executed by the at least one processor, the computing device is enabled to perform the method according to any one of the first aspect and the possible implementations of the first aspect.

According to a fourth aspect, an embodiment of this application provides a computer-readable storage medium, storing computer instructions. When the computer instructions are run on a computer, the method according to any one of the first aspect and the possible implementations of the first aspect is performed.

According to a fifth aspect, an embodiment of this application provides a computer program product. The computer program product includes computer instructions, and when the computer instructions are run on a computer, the method according to any one of the first aspect and the possible implementations of the first aspect is performed.

According to a sixth aspect, an embodiment of this application provides a chip, including a memory and a processor. The memory is configured to store computer instructions, and the processor is configured to invoke the computer instructions from the memory and run the computer instructions, to perform the method according to any one of the first aspect and the possible implementations of the first aspect.

It should be understood that, for technical effects achieved by the technical solutions in the second aspect to the sixth aspect and the corresponding possible implementations in this application, refer to the foregoing technical effects of the first aspect and the corresponding possible implementations. Details are not described herein again.

## BRIEF DESCRIPTION OF DRAWINGS

FIG. 1 is a diagram of a hardware structure of a computing device according to an embodiment of this application;
FIG. 2 is a diagram 1 of a method for creating a heterogeneous trusted execution environment according to an embodiment of this application;
FIG. 3A, FIG. 3B, and FIG. 3C are a diagram 2 of a method for creating a heterogeneous trusted execution environment according to an embodiment of this application;
FIG. 4 is a diagram 1 of an interaction relationship between modules in a method for creating a heterogeneous trusted execution environment according to an embodiment of this application;
FIG. 5A and FIG. 5B are a diagram 3 of a method for creating a heterogeneous trusted execution environment according to an embodiment of this application;
FIG. 6 is a diagram 2 of an interaction relationship between modules in a method for creating a heterogeneous trusted execution environment according to an embodiment of this application;
FIG. 7A and FIG. 7B are a diagram 4 of a method for creating a heterogeneous trusted execution environment according to an embodiment of this application;
FIG. 8 is a diagram 3 of an interaction relationship between modules in a method for creating a heterogeneous trusted execution environment according to an embodiment of this application;
FIG. 9 is a diagram 1 of a structure of a computing system according to an embodiment of this application;
FIG. 10 is a diagram 2 of a structure of a computing system according to an embodiment of this application; and
FIG. 11 is a diagram 3 of a structure of a computing system according to an embodiment of this application.

## DESCRIPTION OF EMBODIMENTS

The term "and/or" in this specification describes only an association relationship for describing associated objects and represents that three relationships may exist. For example, A and/or B may represent the following three cases: Only A exists, both A and B exist, and only B exists.

In the specification and the claims in embodiments of this application, the terms "first", "second", and the like are intended to distinguish between different objects but do not indicate a particular order of the objects.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the word such as "example" or "for example" is intended to present a relative concept in a specific manner.

In descriptions of embodiments of this application, unless otherwise stated, "a plurality of" means two or more.

First, some concepts related to a method for creating a heterogeneous trusted execution environment, an apparatus, and a computing system that are provided in embodiments of this application are explained and described.

### 1. Confidential computing

The confidential computing is a computing mode in which an encrypted, isolated, and provable computing environment (where the computing environment is referred to as a confidential computing environment) is constructed based on trusted hardware in combination of firmware and software, to ensure data confidentiality and integrity, code integrity, and computing process confidentiality in the computing environment.

A basis of a confidential computing technology is to construct a confidential computing environment based on a hardware architecture. A hardware isolation mechanism ensures that code and data run in the confidential computing environment cannot be accessed or tampered with by untrusted code.

### 2. Trusted execution environment (TEE)

The TEE is a secure area created based on hardware isolation. That is, the TEE is a confidential computing environment of isolated hardware. The TEE and an operating system run in parallel. Currently, mainstream chip vendors have proposed a TEE architecture created based on a CPU, for example, Intel SGX, Intel TDX, AMD SEV, ARM TrustZone, or anARM CCA. For a process of creating the TEE based on the CPU, refer to existing technical documents.

A security isolation entity may be created based on the TEE, and confidential computing is completed via the security isolation entity. For example, one security isolation entity is created on one processor, and one security isolation entity is also created on another processor. The two security isolation entities interact to perform confidential communication, for example, confidential data transmission and confidential computing.

For example, the security isolation entity may be a virtual machine, an application program, a container, or a firmware program.

In view of a problem in the background, embodiments of this application provide a method for creating a heterogeneous trusted execution environment, mainly applied to a computing device including a first processor and a second processor that are heterogeneous. The first processor in the computing device creates a first security isolation entity based on a computing resource of the first processor. Then the first processor sends a first creation request to the second processor. The second processor creates a second security isolation entity based on a computing resource of the second processor in response to the first creation request. Further, the first processor performs integrity measurement on the second security isolation entity on a side of the second processor, and the second processor performs integrity measurement on the first security isolation entity on a side of the first processor. In the method, both the first processor and the second processor may perform integrity measurement on the first security isolation entity created on peer sides of the first processor and the second processor. In this way, both the first processor and the second processor may provide information (referred to as confidential data below) used for confidential computing. In conclusion, the method for creating a heterogeneous trusted execution environment provided in embodiments of this application is applicable to a scenario in which the first processor provides confidential data and/or the second processor provides confidential data, that is, the method can cover more comprehensive confidential computing scenarios, and achieve good applicability.

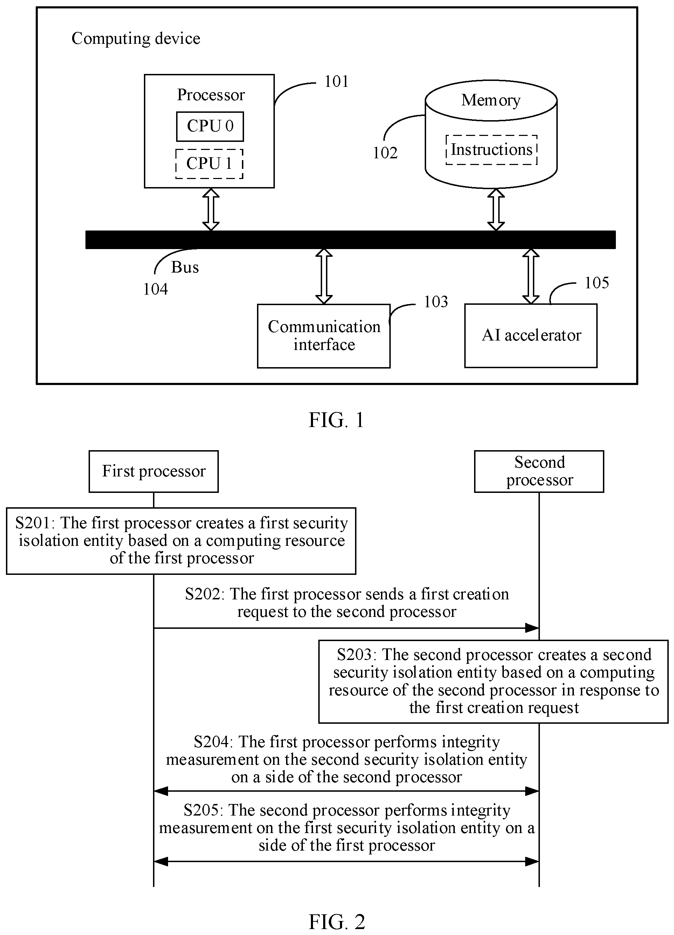

FIG. 1 is a diagram of a hardware structure of a computing device according to an embodiment of this application. Various components shown in FIG. 1 may be implemented in hardware, software, or a combination of hardware and software including one or more signal processing and/or application-specific integrated circuits. As shown in FIG. 1, the computing device may include a processor 101, a memory 102, and a communication interface 103. The processor 101, the memory 102, and the communication interface 103 may be connected to each other through a bus 104, or may be connected to each other in another manner.

The processor 101 is a control center of the computing device. The processor 101 may be a general-purpose central processing unit (central processing unit, CPU), another general-purpose processor, or the like. The general-purpose processor may be a microprocessor, any conventional processor, or the like.

A controller in the processor 101 is a nerve center and a command center of the computing device. The controller may generate an operation control signal based on instruction operation code and a time sequence signal, to complete control of instruction fetch and instruction execution. Optionally, the memory may be further disposed in the processor 101, and is configured to store instructions and data. For example, the processor 101 may include one or more CPUs, for example, a CPU 0 and a CPU 1 that are shown in FIG. 1.

The memory 102 includes but is not limited to a random access memory (random access memory, RAM), a read-only memory (read-only memory, ROM), an erasable programmable read-only memory (erasable programmable read-only memory, EPROM), a flash memory, an optical memory, a magnetic disk storage medium, another magnetic storage device, or any other medium that can carry or store expected program code in an instruction form or in a data structure form and that can be accessed by a computer. In this embodiment of this application, the memory 102 may store information such as computer instructions.

In a possible implementation, the memory 102 may be independent of the processor 101. The memory 102 may be connected to the processor 101 through the bus 104, and is configured to store data, instructions, or program code. When invoking and executing the instructions or the program code stored in the memory 102, the processor 101 can implement related steps in the method for creating a heterogeneous trusted execution environment provided in embodiments of this application.

In another possible implementation, the memory 102 may alternatively be integrated with the processor 101.

The communication interface 103 may be a transceiver module, and is configured to communicate with another device or a communication network, for example, an ethernet, a RAN, or a wireless local area network (wireless local area network, WLAN). The communication interface 103 may receive instructions, a message, data, or the like. The transceiver module may be an apparatus, for example, a transceiver or a transceiver machine. Optionally, the communication interface 103 may alternatively be a transceiver circuit located in the processor 101, and is configured to implement signal input and signal output of the processor. The communication interface 103 may be a wired interface (port), for example, a fiber distributed data interface (fiber distributed data interface, FDDI) or a gigabit ethernet (gigabit ethernet, GE) interface, or the communication interface 103 may be a wireless interface.

The bus 104 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, or the like. The bus may alternatively be classified into a serial bus or a parallel bus. For ease of representation, only one bold line is used for representation in FIG. 1, but it does not represent that there is only one bus or one type of bus.

The computing device provided in this embodiment of this application further includes an AI accelerator 105 that is heterogeneous to the processor 101 (where the AI accelerator may also be referred to as an AI wafer, a computing card, a heterogeneous acceleration unit, or the like). The AI accelerator 105 is a module dedicated to processing a large quantity of computing tasks in the artificial intelligence field, and the AI accelerator 105 is also a processor. The AI accelerator 105 is also connected to another component through the bus 104.

The processor 102 (that is, the central processing unit CPU) is a general-purpose computing module, and is mainly responsible for logic computing and logic control functions for load, and can efficiently process a single task with a complex computing sequence, but has low performance in terms of massive computing. Therefore, the processor may distribute a large quantity of computing tasks to the AI accelerator 105, and after completing computing, the AI accelerator 105 returns a computing result to the processor 101.

For example, the AI accelerator 105 may include a graphics processing unit (graphics processing unit, GPU), a field programmable gate array (field programmable gate array, FPGA), or an application-specific integrated circuit (application-specific integrated circuit, ASIC).

The GPU may also be referred to as a visual processor or a display chip, and is a microprocessor that performs image and graphics related computing work on a personal computer, a workstation, a game console, and some mobile devices (such as a tablet computer and a smartphone). The GPU includes thousands of cores, can process thousands of threads at the same time, and can run massive computing in parallel.

The FPGA is a programmable logic processor, and users can perform repeated programming according to requirements of the users. The FPGA is good at processing intensive data access with low control logic complexity. The FPGA allows the users to program a quantity of circuits by using small logical blocks, and can process any type of digital function.

The ASIC is an integrated circuit of a special specification that is designed for a specific purpose, and is designed and manufactured to meet specific user requirements and specific electronic system requirements. For example, a tensor processing unit (tensor processing unit, TPU) and a neural network processing unit (neural network processing unit, NPU) are both ASICs. The TIP and the NPU are chips designed for machine learning and suitable for massive data computing and have powerful computing capabilities.

It should be noted that the computing device shown in FIG. 1 is merely an example of a computing device. The computing device may have more or fewer components than those shown in FIG. 1, may combine two or more components, or may have different component configurations.

The processor 101 may create an instance based on a computing resource of the processor 101, and the AI accelerator 105 may also create, based on the computing resource of the AI accelerator 105, an instance corresponding to a side of the processor 101, so that the created instances can communicate to complete a computing task. In this embodiment of this application, an instance created in a confidential communication scenario is referred to as a security isolation entity.

It should be understood that, in this embodiment of this application, the computing resources of the CPU and the AI accelerator include a computing power resource and a storage resource, the computing resources of the CPU and the AI accelerator are divided into a plurality of resource slices, and the plurality of resource slices include a secure-state resource slice and a non-secure-state resource slice.

In an implementation, states of each of the plurality of resource slices include a secure state and a non-secure state. Initial states of all the resource slices are set to the non-secure state. The state of the resource slice may be configured according to an actual use requirement. For example, a state of a resource slice is changed from the non-secure state to the secure state, and a security isolation entity in the trusted execution environment is created based on the secure-state resource slice. Alternatively, a state of a resource slice may be changed from the secure state to the non-secure state, and an entity in a rich execution environment is created based on the non-secure-state resource slice.

For example, different identification information may identify the state of the resource slice. For example, "0" identifies that the state of the resource slice is the non-secure state, and "1" identifies that the state of the resource slice is the secure state.

In this embodiment of this application, running states of operation units (including the CPU and the AI accelerator) of the computing device may be classified into the secure state and the non-secure state, and states of a memory and a cache of the computing device are also classified into the secure state and the non-secure state. For the operation unit in the secure state, the memory and the cache in the secure state may be accessed based on an access permission table, and the memory and the cache in the non-secure state may also be accessed based on the access permission table. For the operation unit in the non-secure state, only the memory and the cache in the non-secure state may be accessed based on the access permission table. To support distinguishing between access of the operation unit in the secure state and the operation unit in the non-secure state to the computing resource, a secure bit used to distinguish whether the operation unit is in the secure state needs to be carried in a resource request packet. The secure bit is transparently transmitted by hardware and cannot be sensed or modified by software.

In this embodiment of this application, the resource slice of the CPU and/or the AI accelerator may be managed by a resource management device, and another device may learn of, via the resource management device, whether there is an available resource slice in the CPU and/or the AI accelerator. Optionally, the resource management device may be a device independent of the foregoing computing device, or the resource management device may be the computing device, for example, the CPU in the computing device.

It should be understood that, during confidential communication, the CPU and the AI accelerator need to separately create one or more pairs of security isolation entities based on respective TEEs, so that transmission of signaling and data is performed through a security communication channel between the security isolation entities. For example, the CPU creates a security isolation entity 1 on a side of the CPU, and then the CPU sends a creation request to the AI accelerator. After receiving the creation request, the AI accelerator creates a security isolation entity 2 on a side of the AI accelerator, so that the security isolation entity 1 and the security isolation entity 2 perform confidential communication.

The method for creating a heterogeneous trusted execution environment provided in embodiments of this application may be applied to a cloud scenario. A virtual machine or a container of a tenant is carried in a trusted execution environment of a CPU. An AT accelerator communicates, by using a device interconnect protocol or a network interconnect protocol, with the virtual machine or the container carried on the CPU, to provide an operation acceleration service.

The method for creating a heterogeneous trusted execution environment provided in embodiments of this application is applied to a computing device including a first processor and a second processor that are heterogeneous. The first processor is a CPU, and the second processor is an AI accelerator. Refer to FIG. 2. The method includes the following steps.

S201: The first processor creates a first security isolation entity based on a computing resource of the first processor.

In this embodiment of this application, a granularity of the computing resource of the first processor may be a resource slice. That the first processor creates the first security isolation entity is specifically as follows: The first processor stores code of the first security isolation entity in a storage resource of the resource slice obtained through division, and runs the code of the first security isolation entity by using a computing power resource of the resource slice obtained through division. A form of the first security isolation entity may be a virtual machine, a container, or the like.

Optionally, after the first processor creates the first security isolation entity, the first processor further needs to verify integrity of the first security isolation entity on a side of the first processor, that is, perform integrity measurement on the first security isolation entity on the side of the first processor. This specifically includes: The first processor verifies a measurement value of the first security isolation entity to determine whether the first security isolation entity is trusted. It should be understood that the measurement value of the first security isolation entity is a measurement value of code of the first security isolation entity and a hardware configuration of the first security isolation entity. For a detailed process of the integrity measurement, refer to existing technical documents. Details are not described in this embodiment of this application.

S202: The first processor sends a first creation request to the second processor.

The first creation request is used to request to create a second security isolation entity on a side of the second processor

S203: The second processor creates the second security isolation entity based on a computing resource of the second processor in response to the first creation request.

A process in which the second processor creates the second security isolation entity is similar to a process in which the first processor creates the first security isolation entity, that is, code of the second security isolation entity is stored in a storage resource of a resource slice obtained through division, and the code of the second security isolation entity is run by using a computing power resource of the resource slice obtained through division. A form of the second security isolation entity may be a firmware program.

S204: The first processor performs integrity measurement on the second security isolation entity.

Optionally, the essence of performing, by the first processor, integrity measurement on the second security isolation entity on the side of the second processor is that the first processor verifies a measurement value of the second security isolation entity on the side of the second processor, to determine whether the second security isolation entity on the side of the second processor is complete. S204 specifically includes the following steps:

S2041: The first processor sends a first measurement request to the second processor, where the first measurement request is used to request to measure integrity of the second security isolation entity on the side of the second processor

S2042: The second processor generates a first measurement value, where the first measurement value is a measurement value of the second security isolation entity on the side of the second processor

S2043: The second processor sends the first measurement value to the first processor.

S2044: The first processor performs integrity measurement on the second security isolation entity on the side of the second processor based on the first measurement value.

S205: The second processor performs integrity measurement on the first security isolation entity on the side of the first processor.

Similarly, the essence of performing, by the second processor, integrity measurement on the first security isolation entity on the side of the first processor is that the second processor verifies a measurement value of the first security isolation entity on the side of the first processor, to determine whether the first security isolation entity on the side of the first processor is complete. S205 specifically includes the following steps:

S2051: The second processor sends a second measurement request to the first processor, where the second measurement request is used to request to measure integrity of the first security isolation entity on the side of the first processor.

S2052: The first processor generates a second measurement value, where the second measurement value is a measurement value of the first security isolation entity on the side of the first processor.

S2053: The first processor sends the second measurement value to the second processor

S2054: The second processor performs integrity measurement on the first security isolation entity on the side of the first processor based on the second measurement value.

In the method for creating a heterogeneous trusted execution environment provided in this embodiment of this application, both the first processor and the second processor may perform integrity measurement on the first security isolation entity created on peer sides of the first processor and the second processor. In this way, both the first processor and the second processor may provide information (referred to as confidential data below) used for confidential computing. The method is applicable to a scenario in which the first processor provides confidential data and/or the second processor provides confidential data, that is, the method can cover more comprehensive confidential computing scenarios, and achieve good applicability.

It should be understood that a process of creating a security isolation entity relates to interaction between a plurality of modules. Specifically, modules on a side of a CPU include a security management module, a trusted measurement module, a security communication module, a created security isolation entity, and a measurement value verification module. The measurement value verification module may be a third-party service module or a module on the side of the first processor, and may also be referred to as a remote measurement value verification module or a local measurement value verification module. Modules on a side of an AI accelerator

include a security management module, a trusted measurement module, a security communication module, and a created security isolation entity.

In this embodiment of this application, the computing device may include a plurality of CPUs and a plurality of AI accelerators. The CPU may interact with the AI accelerator to create security isolation entities, and one or more pairs of security isolation entities may be flexibly created between M CPUs and N AI accelerators, where both M and N are integers greater than or equal to 1.

In the following embodiment, an example is used to describe a process of creating an instance in a trusted execution environment from a perspective of interaction between the CPU and the AI accelerator when M and N have different values. M represents a quantity of CPUs, and N represents a quantity of AI accelerators.

Case 1: M:N=1:1.

Case 2: M:N=1:2.

Case 3: M:N=2:2.

For Case 1 (M:N=1:1), the first processor and the second processor of the computing device interact to create security isolation entities. The first processor is a CPU, and the second processor is an AI accelerator. For ease of description, in the following embodiments, the first processor is referred to as a first CPU, and the second processor is referred to as a first AI accelerator.

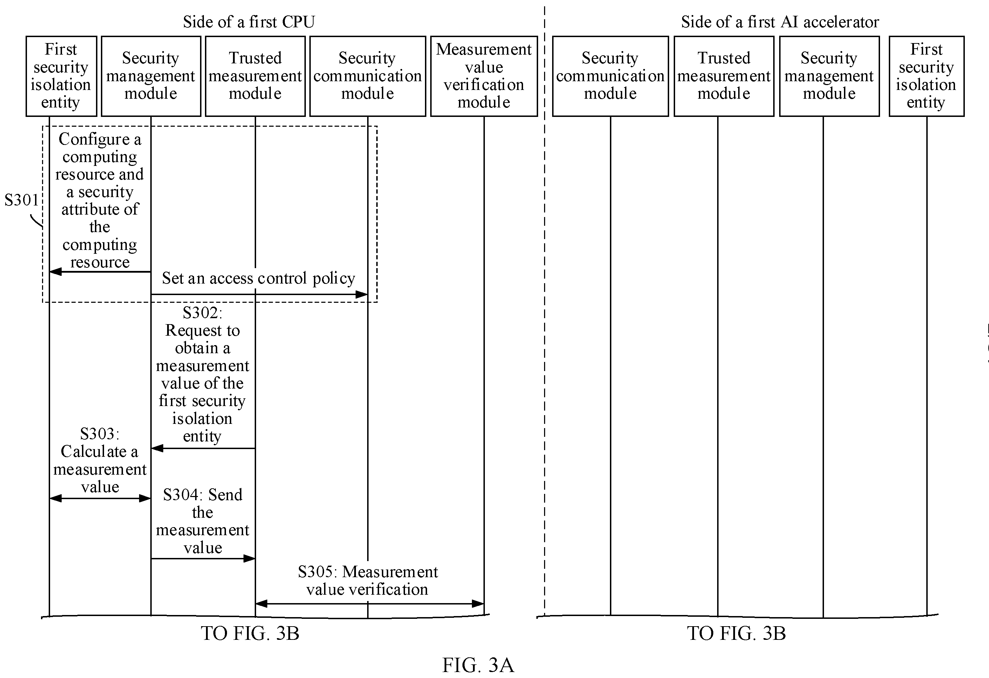

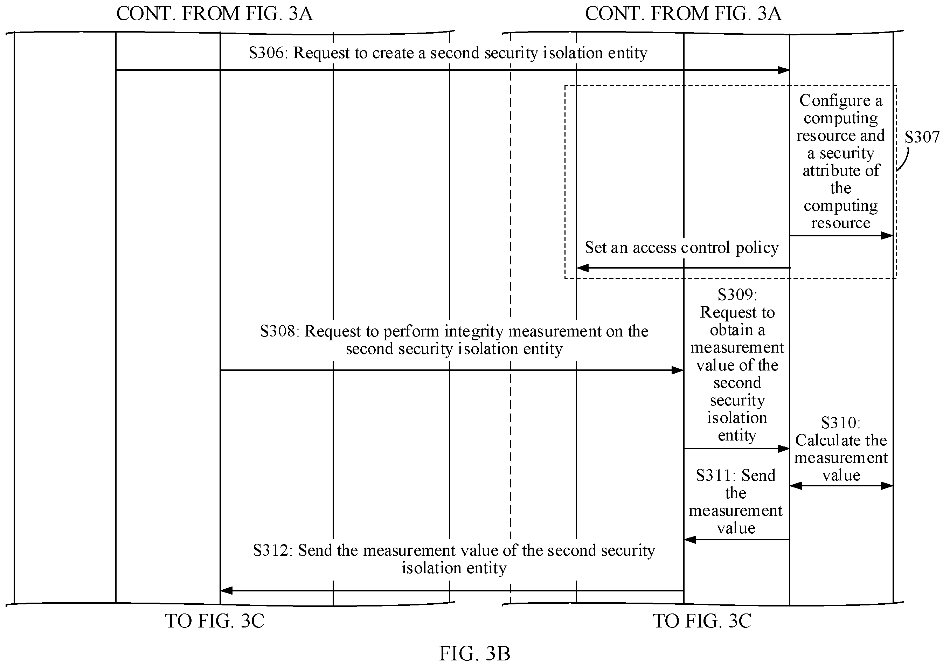

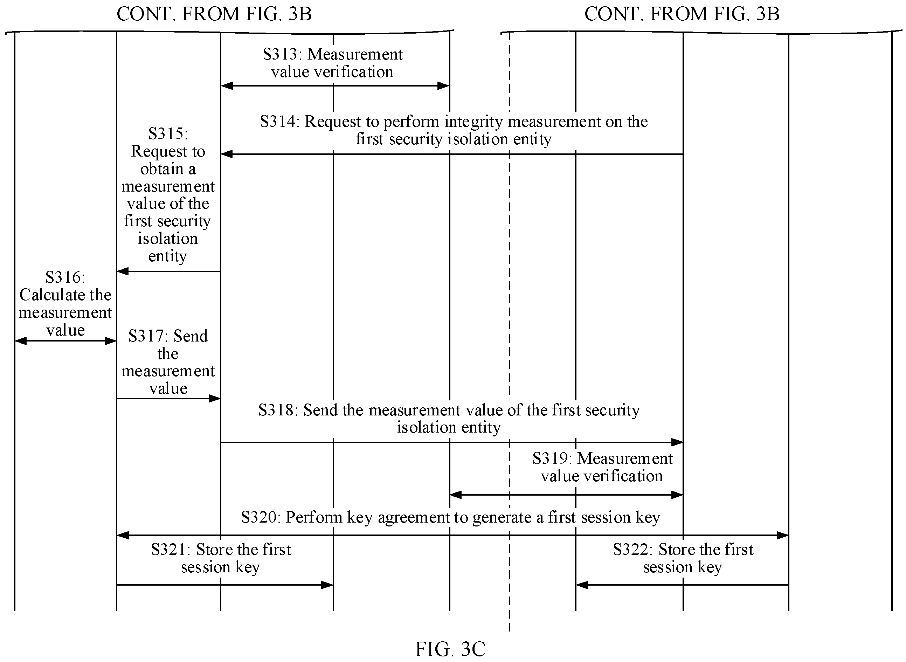

Refer to FIG. 3A, FIG. 3B, and FIG. 3C. The method for creating a heterogeneous trusted execution environment provided in embodiments of this application is described from a perspective of interaction between modules. The method includes the following steps.

S301: A security management module on a side of the first CPU receives an instruction of a platform user, configures a computing resource (including a computing power resource and a storage resource) on the side of the first CPU and a security attribute of the computing resource, sets an access control policy, and creates a first security isolation entity.

In this embodiment of this application, the instruction of the platform user may be understood as an instruction that is triggered by a user and that is used to create security isolation entities on a side of a CPU and a side of an AI accelerator. The computing resource that is on the side of the first CPU and that is configured by the security management module on the side of the first CPU is used to create the first security isolation entity on the side of the first CPU. That the security management module configures the security attribute of the computing resource includes: The security management module sets a state of a resource slice to a secure state.

In an implementation, the foregoing instruction may carry a resource request of the first security isolation entity, and the resource request indicates the computing resource required for creating the first security isolation entity. In this way, the first CPU creates the first security isolation entity based on the resource request of the first security isolation entity by using the resource slice of the first CPU.

In another implementation, the first CPU may alternatively use the resource slice of the first CPU based on a pre-agreed resource division manner. It should be understood that, resources of the first CPU that can be used to create the first security isolation entity may be determined based on the resource division manner.

In this embodiment of this application, that the first CPU sets the access control policy specifically includes: The first CPU generates the access control policy, and configures a first access permission table in a security communication module on the side of the first CPU.

Optionally, the access control policy may be configured at a granularity of a user. For a same user, a same access control policy is generated; and for different users, different access control policies are generated.

In this embodiment of this application, the access control policy that is set by the first CPU includes a first outbound access permission table and a first inbound access permission table.

The first outbound access permission table is used to perform permission check on an access request for accessing a second security isolation entity by the first security isolation entity, and the second security isolation entity is a security isolation entity on a side of the first AI accelerator. Specifically, the security communication module on the side of the first CPU performs permission check on an access address in the access request based on the first outbound access permission table. It should be understood that the first security isolation entity first sends the access request to the security communication module on the side of the first CPU. After the permission check of the security communication module on the access address succeeds, the security communication module on the side of the first CPU sends the access request to a security communication module on the side of the first AI accelerator. In this case, the access address is a physical address of the first AI accelerator, the first outbound access permission table includes physical addresses of a plurality of AI accelerators and permission labels corresponding to the physical addresses, and the permission label indicates a permission or no permission. To be specific, when the first security isolation entity initiates the access request to the second security isolation entity, the first CPU performs permission check on the physical address of the first AI accelerator in the access request based on the first outbound access permission table, and may send the access request if it is determined that the first security isolation entity has a permission.

The first inbound access permission table is used to perform permission check on an access request for accessing the first security isolation entity on the side of the first CPU by the second security isolation entity. Specifically, the security communication module on the side of the first CPU performs permission check on an access address in the access request based on the first inbound access permission table. It should be understood that the security communication module on the side of the first CPU receives the access request sent by the security communication module on the side of the first AI accelerator, and after the permission check of the security communication module on the side of the first CPU on the access address succeeds, the security communication module on the side of the first CPU forwards the access request to the first security isolation entity on the side of the first CPU. In this case, the access address is a physical address of the first CPU, and the first inbound access permission table includes physical addresses of a plurality of CPUs and permission labels corresponding to the physical addresses. To be specific, when the firstAI accelerator initiates the access request to the first CPU, after the access request reaches the first CPU (specifically, the security communication module of the first CPU), the first CPU performs permission check on the physical address of the first CPU in the access request based on the first inbound access permission table. The first CPU receives the address access request if it is determined that the second security isolation entity has a permission.

It may be understood that, after the security management module on the side of the first CPU configures the computing resource (including the computing power resource and the storage resource) on the side of the first CPU and the security attribute of the computing resource, the first CPU may create the first security isolation entity by running code of the first security isolation entity based on the configured computing resource.

S302: A trusted measurement module on the side of the first CPU requests the security management module to obtain a measurement value of the first security isolation entity.

S303: The first security isolation entity on the side of the first CPU interacts with the security management module to generate (calculate) the measurement value of the first security isolation entity.

S304: The security management module on the side of the first CPU sends the measurement value of the first security isolation entity to the trusted measurement module.

S305: The trusted measurement module on the side of the first CPU interacts with a measurement value verification module to perform measurement value verification, to obtain a measurement value verification result.

Specifically, the trusted measurement module on the side of the first CPU sends an integrity verification request to the measurement value verification module, where the integrity verification request includes the measurement value of the first security isolation entity on the side of the first CPU; and the measurement value verification module performs integrity verification on the measurement value of the first security isolation entity that is received by the measurement value verification module. If the integrity verification succeeds, it indicates that the first security isolation entity on the side of the first CPU is complete and trusted; otherwise, the first security isolation entity is incomplete and untrusted.

S306: The security management module on the side of the first CPU requests a security management module of the first AI accelerator to create the second security isolation entity on the side of the first AI accelerator.

Specifically, the security management module on the side of the first CPU sends a first creation request to the security management module of the first AI accelerator.

S307: The security management module on the side of the first AI accelerator configures a computing resource (including a computing power resource and a storage resource) on the side of the first AI accelerator and a security attribute of the computing resource, sets an access control policy, and creates the second security isolation entity on the side of the first AI accelerator.

The computing resource that is on the side of the first AI accelerator and that is configured by the security management module on the side of the first AI accelerator is used to create the second security isolation entity on the side of the first AI accelerator. That the security management module configures the security attribute of the computing resource includes: The security management module sets a state of a resource slice to the secure state.

For a creation request sent by a CPU, a security isolation entity created by an AI accelerator based on a resource slice of the AI accelerator is not created based on all resources of the AI accelerator. Therefore, another resource slice of the AI accelerator may be used to create another security isolation entity. It can be learned that the resources of the AI accelerator can be fully utilized, to improve resource utilization of the AI accelerator.

In this embodiment of this application, that the first AI accelerator sets the access control policy specifically includes: The first AI accelerator generates the access control policy, and configures the access control policy in the security communication module on the side of the first AI accelerator.

Similarly, the access control policy may be configured at a granularity of a user. For a same user, a same access control policy is generated; and for different users, different access control policies are generated.

In this embodiment of this application, the access control policy that is set by the first AI accelerator includes a second outbound access permission table and a second inbound access permission table.

The second outbound access permission table is used to perform permission check on an access request for accessing the first security isolation entity by the second security isolation entity. Specifically, the security communication module on the side of the first AI accelerator performs permission check on an access address in the access request based on the second outbound access permission table. It should be understood that the second security isolation entity on the side of the first AI accelerator first sends the access request to the security communication module on the side of the first AI accelerator. After the permission check of the security communication module on the access address succeeds, the security communication module on the side of the first AI accelerator sends the access request to the security communication module on the side of the first CPU. In this case, the access address is the physical address of the first CPU, the second outbound access permission table includes physical addresses of a plurality of CPUs and permission labels corresponding to the physical addresses, and the permission label indicates a permission or no permission. To be specific, when the second security isolation entity initiates the access request to the first security isolation entity, the first AI accelerator performs permission check on the physical address of the first CPU in the access request based on the second outbound access permission table, and may send the access request if it is determined that the second security isolation entity has a permission.

The second inbound access permission table is used to perform permission check on an access request for accessing the second security isolation entity by the first security isolation entity. Specifically, the security communication module on the side of the first AI accelerator performs permission check on an access address in the access request based on the second inbound access permission table. It should be understood that the security communication module on the side of the first AI accelerator receives the access request sent by the security communication module on the side of the first CPU, and after the permission check of the security communication module of the first AI accelerator on the access address succeeds, the security communication module on the side of the first AI accelerator forwards the access request to the second security isolation entity on the side of the first AI accelerator. In this case, the access address is the physical address of the first AI accelerator, and the second inbound access permission table includes physical addresses of a plurality of AI accelerators and permission labels corresponding to the physical addresses. To be specific, when the first security isolation entity initiates the access request to the second security isolation entity, after the access request reaches the first AI accelerator (specifically, the security communication module on the side of the first AI accelerator), the first AI accelerator performs permission check on the physical address of the first AI accelerator in the access request based on the second inbound access permission table. The second security isolation entity may receive the access request if it is determined that the first security isolation entity has a permission.

S308: The trusted measurement module on the side of the first CPU requests the trusted measurement module on the side of the first AI accelerator to perform integrity measurement on the second security isolation entity on the side of the first AI accelerator.

Specifically, the trusted measurement module on the side of the first CPU sends a measurement request to the trusted measurement module on the side of the first AI accelerator, where the measurement request is used to request to perform integrity measurement on the first security isolation entity on the side of the first AI accelerator.

S309: The trusted measurement module on the side of the first AI accelerator requests the security management module on the side of the first AI accelerator to obtain a measurement value of the first security isolation entity.

S310: The second security isolation entity on the side of the first AI accelerator interacts with the security management module to generate a measurement value of the second security isolation entity on the side of the first AI accelerator.

The measurement value of the second security isolation entity may be referred to as a first measurement value.

S311: The security management module on the side of the first AI accelerator sends the measurement value of the second security isolation entity on the side of the first AI accelerator to the trusted measurement module on the side of the first AI accelerator.

S312: The trusted measurement module on the side of the first AI accelerator sends the measurement value of the second security isolation entity on the side of the first AI accelerator to the trusted measurement module on the side of the first CPU.

In this embodiment of this application, after the security management module on the side of the first AI accelerator generates the first measurement value, the security management module of the first AI accelerator may encrypt the first measurement value by using a preset private key, and send the encrypted first measurement value to the trusted measurement module on the side of the first CPU. After receiving the encrypted first measurement value, the trusted measurement module on the side of the first CPU decrypts the first measurement value by using a preset public key.

S313: The trusted measurement module on the side of the first CPU interacts with the measurement value verification module to perform measurement value verification, to obtain an integrity verification result.

Specifically, the trusted measurement module on the side of the first CPU sends an integrity verification request to the measurement value verification module, where the integrity verification request includes the measurement value of the second security isolation entity on the side of the first AI accelerator; and the measurement value verification module performs integrity verification on the measurement value that is of the second security isolation entity on the side of the first AI accelerator and that is received by the measurement value verification module, where the integrity verification result includes a verification success or a verification failure. If the integrity verification succeeds, it indicates that the second security isolation entity on the side of the first AI accelerator is complete and trusted; otherwise, the second security isolation entity is incomplete and untrusted. For detailed content of the integrity verification, refer to existing technical documents.

The first CPU completes the integrity measurement on the second security isolation entity on the side of the first AI accelerator through S308 to S313.

S314: The trusted measurement module on the side of the first AI accelerator requests the trusted measurement module on the side of the first CPU to perform integrity measurement on the first security isolation entity on the side of the first CPU.

Specifically, the trusted measurement module on the side of the first AI accelerator sends a measurement request to the trusted measurement module on the side of the first CPU, where the measurement request is used to request to perform integrity measurement on the first security isolation entity on the side of the first CPU.

S315: The trusted measurement module on the side of the first CPU requests the security management module on the side of the first CPU to obtain a measurement value of the first security isolation entity.

S316: The first security isolation entity on the side of the first CPU interacts with the security management module on the side of the first CPU to generate the measurement value of the first security isolation entity on the side of the first CPU.

The measurement value of the first security isolation entity on the side of the first CPU may be referred to as a second measurement value.

S317: The security management module on the side of the first CPU sends the measurement value of the first security isolation entity on the side of the first CPU to the trusted measurement module on the side of the first CPU.

S318: The trusted measurement module on the side of the first CPU sends the measurement value of the first security isolation entity on the side of the first CPU to the trusted measurement module on the side of the first AI accelerator.

The trusted measurement module on the side of the first CPU may encrypt the second measurement value, and then send the encrypted second measurement value to the trusted measurement module on the side of the first AI accelerator. After receiving the encrypted second measurement value, the trusted measurement module on the side of the first AI accelerator performs decryption to obtain the second measurement value.

S319: The trusted measurement module on the side of the first AI accelerator interacts with the measurement value verification module to perform measurement value verification, to obtain a measurement value verification result.

Specifically, the trusted measurement module of the first AI accelerator sends an integrity verification request to the measurement value verification module, where the integrity verification request includes the measurement value of the first security isolation entity on the side of the first CPU; and the measurement value verification module performs integrity verification on the measurement value that is of the first security isolation entity on the side of the first CPU and that is received by the measurement value verification module. If the integrity verification succeeds, it indicates that the first security isolation entity on the side of the first CPU is complete; otherwise, the first security isolation entity is incomplete.

The first AI accelerator completes the integrity measurement on the first security isolation entity on the side of the first CPU through S314 to S319.

In conclusion, after the first CPU performs integrity measurement on the second security isolation entity on the side of the first AI accelerator, and the first AI accelerator performs integrity measurement on the first security isolation entity on the side of the first CPU, the first security isolation entity and the second security isolation entity create a security communication relationship. Subsequently, the first security isolation entity and the second security isolation entity perform confidential communication.

Optionally, the method for creating a heterogeneous trusted execution environment provided in embodiments of this application further includes the following steps.

S320: The security management module on the side of the first CPU performs key agreement with the security management module on the side of the firstAI accelerator to generate a first session key.

The first session key is used to encrypt and decrypt confidential data in a process in which the first security isolation entity and the second security isolation entity perform confidential communication.

S321: The security management module on the side of the first CPU stores the first session key in the security communication module on the side of the first CPU.

S322: The security management module on the side of the first AI accelerator stores the first session key in the security communication module on the side of the firstAI accelerator.

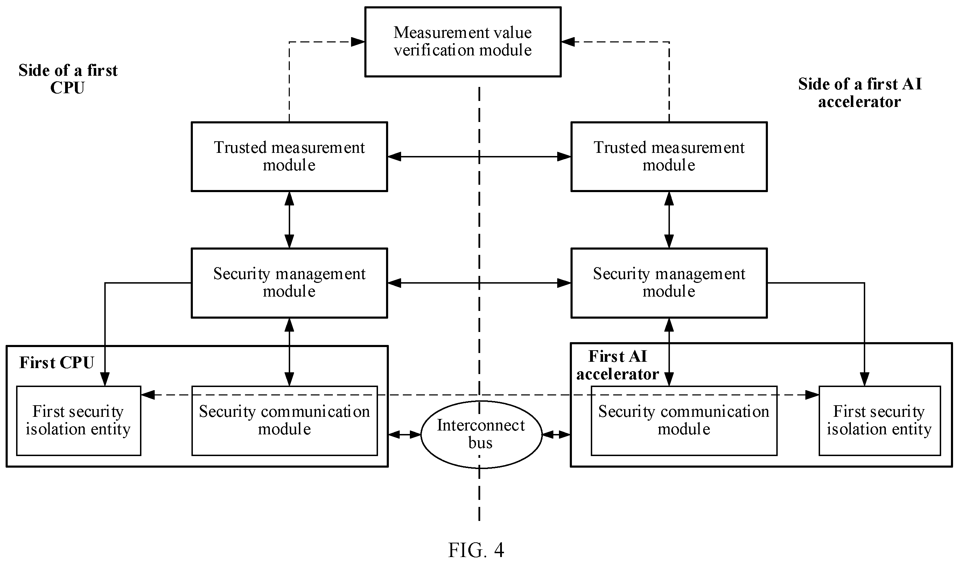

With reference to the flowchart of the method for creating a heterogeneous trusted execution environment shown in FIG. 3A, FIG. 3B, and FIG. 3C, FIG. 4 is a diagram of an interaction relationship between the modules of the first CPU and the first AI accelerator.

In this embodiment of this application, after the first CPU interacts with the first AI accelerator to create the first security isolation entity and the second security isolation entity, the first security isolation entity and the second security isolation entity perform confidential communication. The first security isolation entity can defend against an attack performed in a software manner, that is, it can be ensured that confidential data is not listened to or tampered with by using a software-based method. However, data may be intercepted or tampered with by an attacker by using a physical method (for example, by using a probe). Therefore, the security management module on the side of the first CPU performs key agreement with the security management module on the side of the first AI accelerator to generate the first session key to encrypt and decrypt confidential data in a confidential communication process. In this way, security of confidential computing can be improved.

Optionally, after the first security isolation entity and the second security isolation entity complete the confidential computing, the first CPU and the first AI accelerator may respectively release the security isolation entities created by the first CPU and the first AI accelerator. Specifically, a process in which the first CPU and the first AI accelerator release the first security isolation entity and the second security isolation entity includes the following steps.

S1: The first CPU releases the first security isolation entity on the side of the first CPU.

That the first CPU releases the first security isolation entity on the side of the first CPU includes: The first CPU deletes data and an access control policy that correspond to the first security isolation entity. Optionally, the first CPU may set a state of a resource slice for creating the first security isolation entity to a non-secure state.

S2: The first CPU sends a first release instruction to the first AI accelerator. Correspondingly, the first AI accelerator receives the first release instruction from the first CPU.

The first release instruction instructs the first AI accelerator to release the second security isolation entity on the side of the first AI accelerator.

S3: The first AI accelerator releases the second security isolation entity on the side of the first AI accelerator in response to the first release instruction.

Specifically, that the first AI accelerator releases the second security isolation entity on the side of the first AI accelerator includes: The first AI accelerator deletes data and an access control policy that correspond to the second security isolation entity. Optionally, the first AI accelerator may also set a state of a resource slice for creating the second security isolation entity to the non-secure state.

S4: The first AI accelerator sends a response message to the first CPU. Correspondingly, the first CPU receives the response message.

The response message is used to notify the first CPU that the first AI accelerator has released the second security isolation entity on the side of the first AI accelerator.

erator.

Through S1 to S4, the first CPU and the first AI accelerator respectively release the security isolation entities created by the first CPU and the first AI accelerator. In this way, subsequently, the resource slice of the first CPU may be used by the first CPU to create another security isolation entity, and the resource slice of the first AI accelerator may also be used to create another security isolation entity for a creation request that is sent by the first CPU or another CPU and that is used to create another security isolation entity.

For Case 2 (M:N=1:2), the computing device provided in embodiments of this application further includes a third processor. The third processor is an AI accelerator. For ease of description, the third processor is referred to as a second IA accelerator in the following embodiments.

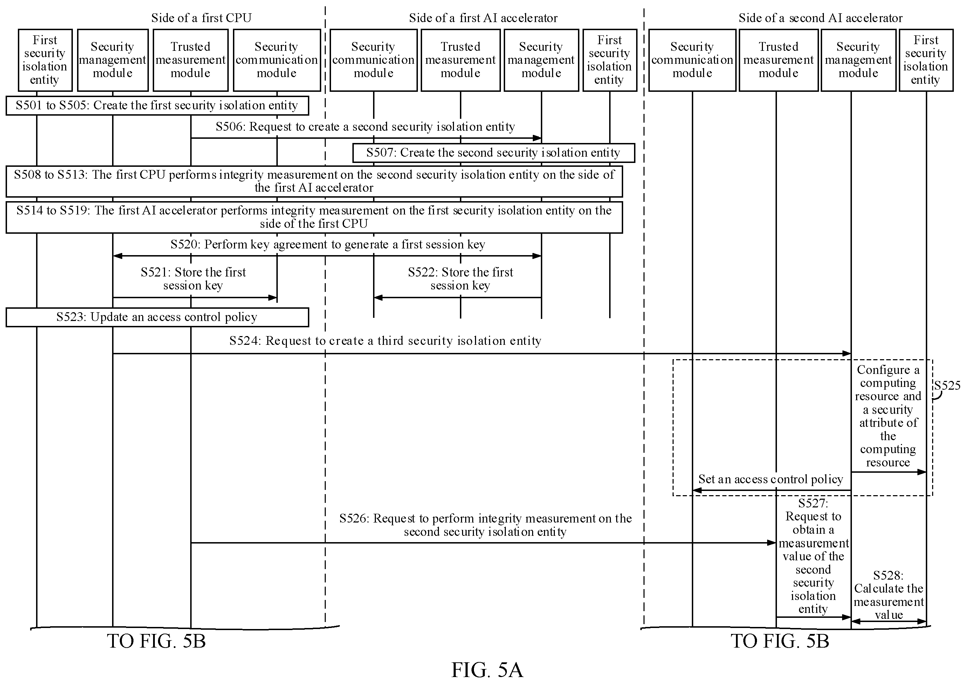

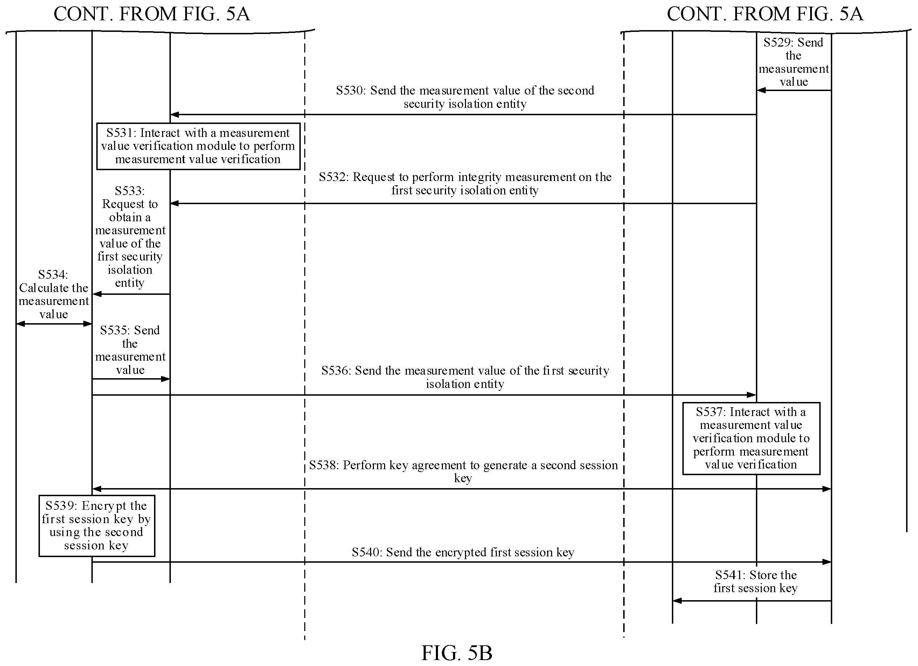

Refer to FIG. 5A and FIG. 5B. The method for creating a heterogeneous trusted execution environment provided in embodiments of this application is described from a perspective of interaction between modules (where a measurement value verification module is omitted in FIG. 5A and FIG. 5B). The method includes the following steps.

S501: A security management module on a side of the first CPU receives an instruction of a platform user, configures a computing resource on the side of the first CPU and a security attribute of the computing resource, sets an access control policy, and creates a first security isolation entity.

S502: A trusted measurement module on the side of the first CPU requests the security management module to obtain a measurement value of the first security isolation entity.

S503: The first security isolation entity on the side of the first CPU interacts with the security management module to generate the measurement value of the first security isolation entity on the side of the first CPU.

S504: The security management module on the side of the first CPU sends the measurement value of the first security isolation entity on the side of the first CPU to the trusted measurement module.

S505: The trusted measurement module on the side of the first CPU interacts with the measurement value verification module to perform measurement value verification, to obtain a measurement value verification result.

S506: The security management module on the side of the first CPU requests a security management module of the first AI accelerator to create a second security isolation entity on a side of the first AI accelerator.

S507: The security management module on the side of the first AI accelerator configures a computing resource and a security attribute of the computing resource on the side of the first AI accelerator, sets an access control policy, and creates a second security isolation entity.

S508: The trusted measurement module on the side of the first CPU requests the trusted measurement module on the side of the first AI accelerator to perform integrity measurement on the first security isolation entity on the side of the first AI accelerator.

S509: The trusted measurement module on the side of the first AI accelerator requests the security management module on the side of the first AI accelerator to obtain a measurement value of the first security isolation entity.

S510: The second security isolation entity on the side of the first AI accelerator interacts with the security management module on the side of the first AI accelerator to generate a measurement value of the second security isolation entity on the side of the firstAI accelerator.

S511: The security management module on the side of the first AI accelerator sends the measurement value of the second security isolation entity on the side of the first AI accelerator to the trusted measurement module on the side of the first AI accelerator.

S512: The trusted measurement module on the side of the first AI accelerator sends the measurement value of the second security isolation entity on the side of the first AI accelerator to the trusted measurement module on the side of the first CPU.

S513: The trusted measurement module on the side of the first CPU interacts with the measurement value verification module to perform measurement value verification, to obtain an integrity verification result.

S508 to S513 are a process in which the first CPU performs integrity measurement on the second security isolation entity on the side of the first AI accelerator.

S514: The trusted measurement module on the side of the first AI accelerator requests the trusted measurement module on the side of the first CPU to perform integrity measurement on the first security isolation entity on the side of the first CPU.

S515: The trusted measurement module on the side of the first CPU requests the security management module on the side of the first CPU to obtain a measurement value of the first security isolation entity.

S516: The first security isolation entity on the side of the first CPU interacts with the security management module on the side of the first CPU to generate the measurement value of the first security isolation entity on the side of the first CPU.

S517: The security management module on the side of the first CPU sends the measurement value of the first security isolation entity on the side of the first CPU to the trusted measurement module on the side of the first CPU.

S518: The trusted measurement module on the side of the first CPU sends the measurement value of the first security isolation entity on the side of the first CPU to the trusted measurement module on the side of the first AI accelerator.

S519: The trusted measurement module on the side of the firstAI accelerator interacts with the measurement value verification module to perform measurement value verification, to obtain a measurement value verification result.

S514 to S519 are a process in which the first AI accelerator performs integrity measurement on the first security isolation entity on the side of the first CPU.

Through S501 to S519, the first security isolation entity on the side of the first CPU and the second security isolation entity on the side of the first AI accelerator are created, and the first CPU and the first AI accelerator respectively perform integrity measurement on the security isolation entities created by the first AI accelerator and the first CPU.

S520: The security management module on the side of the first CPU performs key agreement with the security management module on the side of the firstAI accelerator to generate a first session key.

The first session key is used to encrypt and decrypt confidential data in a process in which the first security isolation entity and the second security isolation entity perform confidential communication.

S521: The security management module on the side of the first CPU stores the first session key in a security communication module on the side of the first CPU.

S522: The security management module on the side of the firstAI accelerator stores the first session key in a security communication module on the side of the firstAI accelerator.

For more detailed descriptions of S501 to S522, refer to the descriptions of S301 to S322 in the foregoing embodiment. Details are not described herein again.

In this embodiment of this application, the first CPU further interacts with the secondAI accelerator to create a third security isolation entity on a side of the second AI accelerator. Details are as follows:
S523: The first CPU updates the access control policy.

In this embodiment of this application, that the first CPU updates the access control policy includes: The first CPU generates the access control policy for communicating with the first security isolation entity on the side of the secondAI accelerator, and configures the access control policy in the security communication module on the side of the first CPU.

In this embodiment of this application, an access control policy obtained through update by the first CPU includes a fourth outbound access permission table and a fourth inbound access permission table.

The fourth outbound access permission table is used to perform permission check on an access request for accessing the third security isolation entity by the first security isolation entity, and the third security isolation entity is a security isolation entity on the side of the second AI accelerator. In this case, an access address in the access request is a physical address of the second AI accelerator, the fourth outbound access permission table includes physical addresses of a plurality of AI accelerators and permission labels corresponding to the physical addresses, and the permission label indicates a permission or no permission. To be specific, when the first security isolation entity initiates the access request to the third security isolation entity, the first CPU performs permission check on the physical address of the second AI accelerator in the access request based on the fourth outbound access permission table, and may send the access request if it is determined that the first security isolation entity has a permission.

The fourth inbound access permission table is used to perform permission check on an access request for accessing the first security isolation entity by the third security isolation entity. In this case, an access address in the access request is a physical address of the first CPU, and the fourth inbound access permission table includes physical addresses of a plurality of CPUs and permission labels corresponding to the physical addresses. To be specific, when the third security isolation entity initiates the access request to the first security isolation entity, after the access request reaches the first CPU (specifically, the security communication module on the side of the CPU), the first CPU performs permission check on the physical address of the first CPU in the access request based on the fourth inbound access permission table. The first security isolation entity receives the access request if it is determined that the third security isolation entity has a permission.

S524: The security management module on the side of the first CPU requests a security management module of the second AI accelerator to create the third security isolation entity on the side of the second AI accelerator.

Specifically, the security management module on the side of the first CPU sends a second creation request to the security management module of the second AI accelerator. The second creation request is used to request to create the third security isolation entity on the side of the second AI accelerator.

S525: The security management module on the side of the second AI accelerator configures a computing resource on the side of the second AI accelerator and a security attribute of the computing resource, sets an access control policy, and creates the third security isolation entity.

The computing resource that is on the side of the second AI accelerator and that is configured by the security management module on the side of the second AI accelerator is used to create the third security isolation entity. That the security management module on the side of the second AI accelerator configures the security attribute of the computing resource includes: The security management module sets a state of a resource slice to a secure state.

That the second AI accelerator sets the access control policy specifically includes: The second AI accelerator generates the access control policy, and configures the access control policy in a security communication module on the side of the second AI accelerator.

In this embodiment of this application, the access control policy that is set by the second AI accelerator includes a third outbound access permission table and a third inbound access permission table.

The third outbound access permission table is used to perform permission check on an access request for accessing the first security isolation entity by the third security isolation entity. In this case, an access address in the access request is the physical address of the first CPU, the third outbound access permission table includes physical addresses of a plurality of CPUs and permission labels corresponding to the physical addresses, and the permission label indicates a permission or no permission. To be specific, when the third security isolation entity initiates address access to the first security isolation entity, the security communication module on the side of the second AI accelerator performs permission check on the physical address of the first CPU in the access request based on the third outbound access permission table, and may send the access request if it is determined that the third security isolation entity has a permission.

The third inbound access permission table is used to perform permission check on an access request for accessing the third security isolation entity by the first security isolation entity. In this case, an access address in the access request is the physical address of the second AI accelerator, and the third inbound access permission table includes physical addresses of a plurality of AI accelerators and permission labels corresponding to the physical addresses. To be specific, when the first security isolation entity initiates the access request to the third security isolation entity, and the access request reaches the second AI accelerator (specifically, the security communication module on the side of the second AI accelerator), the second AI accelerator performs permission check on the physical address of the second AI accelerator in the access request based on the third inbound access permission table. The third security isolation entity may receive the access request if it is determined that the first security isolation entity has a permission.

S526: The trusted measurement module on the side of the first CPU requests a trusted measurement module on the side of the second AI accelerator to perform integrity measurement on the third security isolation entity on the side of the second AI accelerator.

Specifically, the trusted measurement module on the side of the first CPU sends a measurement request to the trusted measurement module on the side of the second AI accelerator, where the measurement request is used to request to perform integrity measurement on the third security isolation entity on the side of the second AI accelerator.

S527: The trusted measurement module on the side of the second AI accelerator requests the security management module on the side of the second AI accelerator to obtain a measurement value of the third security isolation entity.

S528: The third security isolation entity on the side of the second AI accelerator interacts with the security management module on the side of the second AI accelerator to generate the measurement value of the third security isolation entity on the side of the second AI accelerator.

The measurement value of the third security isolation entity on the side of the second AI accelerator may be referred to as a third measurement value.

S529: The security management module on the side of the second AI accelerator sends the measurement value of the third security isolation entity on the side of the second AI accelerator to the trusted measurement module on the side of the second AI accelerator.

S530: The trusted measurement module on the side of the second AI accelerator sends the measurement value of the third security isolation entity on the side of the second AI accelerator to the trusted measurement module on the side of the first CPU.

S531: The trusted measurement module on the side of the first CPU interacts with the measurement value verification module to perform measurement value verification, to obtain an integrity verification result.

S526 to S531 are a process in which the first CPU performs integrity measurement on the third security isolation entity on the side of the second AI accelerator.

S532: The trusted measurement module on the side of the second AI accelerator requests the trusted measurement module on the side of the first CPU to perform integrity measurement on the first security isolation entity on the side of the first CPU.

Specifically, the trusted measurement module on the side of the second AI accelerator sends a measurement request to the trusted measurement module on the side of the first CPU, where the measurement request is used to request to perform integrity measurement on the first security isolation entity on the side of the first CPU.

S533: The trusted measurement module on the side of the first CPU requests the security management module on the side of the first CPU to obtain a measurement value of the first security isolation entity.

S534: The first security isolation entity on the side of the first CPU interacts with the security management module on the side of the first CPU to generate the measurement value of the first security isolation entity on the side of the first CPU.

The measurement value of the first security isolation entity on the side of the first CPU is the second measurement value.

S535: The security management module on the side of the first CPU sends the measurement value of the first security isolation entity on the side of the first CPU to the trusted measurement module on the side of the first CPU.

S536: The trusted measurement module on the side of the first CPU sends the measurement value of the first security isolation entity on the side of the first CPU to the trusted measurement module on the side of the second AI accelerator.

S537: The trusted measurement module on the side of the second AI accelerator interacts with the measurement value verification module to perform measurement value verification, to obtain a measurement value verification result.

S532 to S537 are a process in which the second AI accelerator performs integrity measurement on the first security isolation entity on the side of the first CPU.

Through S523 to S537, the first security isolation entity on the side of the first CPU and the third security isolation entity on the side of the second AI accelerator are created, and the first CPU and the second AI accelerator respectively perform integrity measurement on the security isolation entities created by the second AI accelerator and the first CPU.

S538: The security management module on the side of the first CPU performs key agreement with the security management module on the side of the second AI accelerator to generate a second session key.

The second session key may be referred to as a temporary session key.

S539: The security management module on the side of the first CPU encrypts the first session key by using the second session key.

S540: The security management module on the side of the first CPU sends the encrypted first session key to the security management module on the side of the second AI accelerator.

S541: The security management module on the side of the second AI accelerator stores the first session key in the security communication module on the side of the second AI accelerator.

The security management module on the side of the second AI accelerator receives the encrypted first session key, decrypts the encrypted first session key by using the second session key, and stores the first session key in the security communication module on the side of the second AI accelerator.

In this embodiment of this application, the first security isolation entity on the side of the first CPU and the third security isolation entity on the side of the second AI accelerator encrypt and decrypt confidential data in a confidential communication process based on the first session key. In this way, security of confidential computing can be improved.

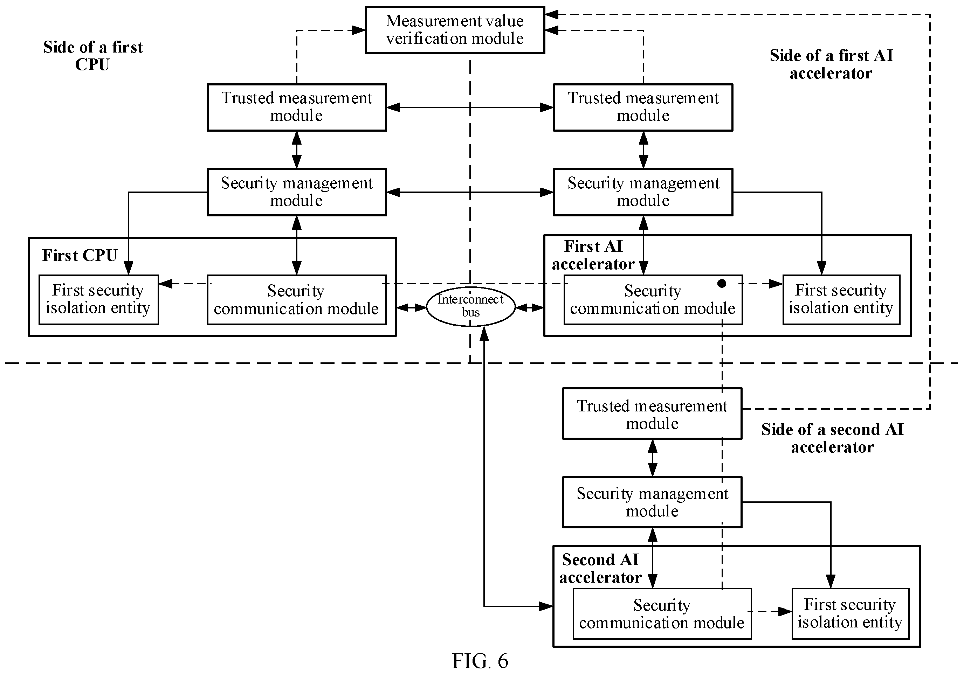

With reference to the flowchart of the method for creating a heterogeneous trusted execution environment shown in FIG. 5A and FIG. 5B, FIG. 6 is a diagram of an interaction relationship between the modules of the first CPU, the first AI accelerator, and the second AI accelerator.

For Case 3 (M:N=2:2), the computing device provided in embodiments of this application further includes a fourth processor. The fourth processor is a CPU.

For ease of description, the fourth processor is referred to as a second CPU in the following embodiments.

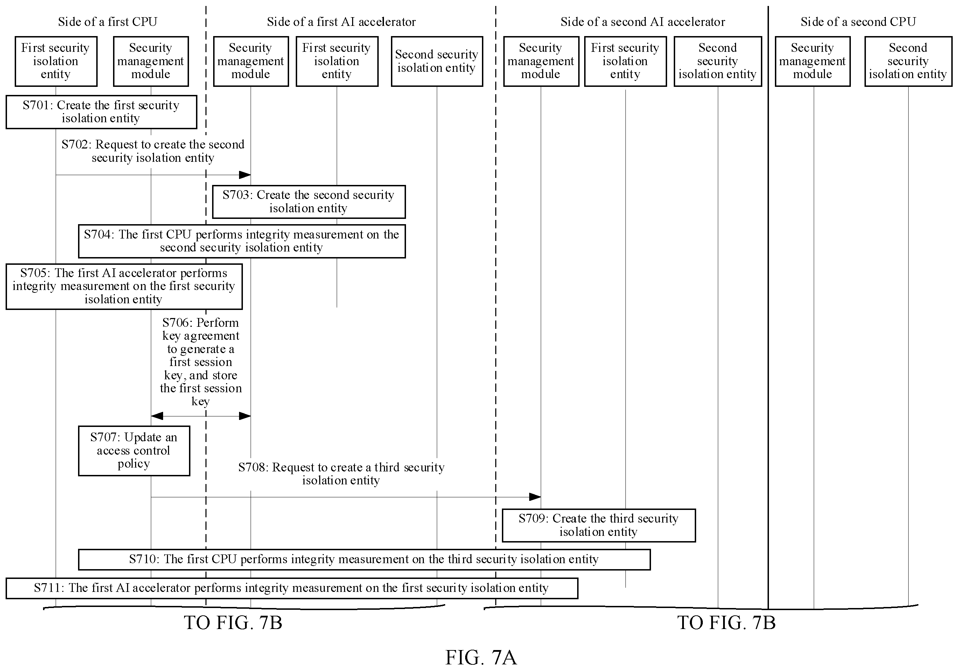

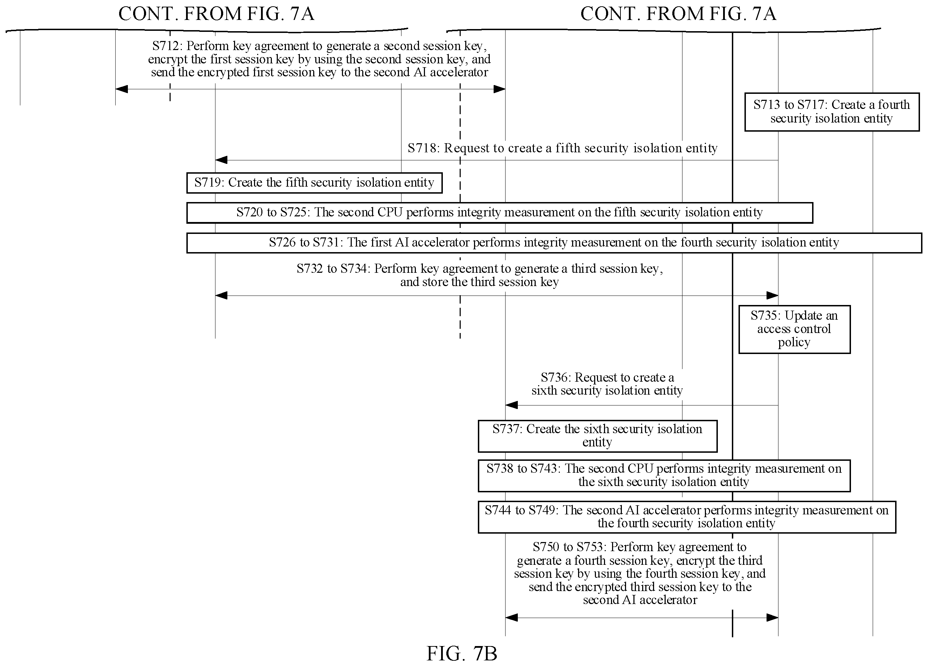

Refer to FIG. 7A and FIG. 7B. The method for creating a heterogeneous trusted execution environment provided in embodiments of this application is described from a perspective of interaction between modules. The method includes the following steps.

S701: Perform S501 to S505 to create the first security isolation entity on a side of the first CPU, and perform integrity measurement on the first security isolation entity.

S702: Perform S506: The security management module on the side of the first CPU requests a security management module of the first AI accelerator to create a second security isolation entity on a side of the first AI accelerator.

S703: Perform S507 to create the second security isolation entity on the side of the first AI accelerator.

S704: Perform S508 to S513: The first CPU performs integrity measurement on the second security isolation entity on the side of the first AI accelerator.

S705: Perform S514 to S519: The first AI accelerator performs integrity measurement on the first security isolation entity on the side of the first CPU.

S706: Perform S520 to S522: The first CPU performs key agreement with the first AI accelerator to generate a first session key, and stores the first session key in the security communication module on the side of the first CPU and the security communication module on the side of the first AI accelerator.

The first session key is used to encrypt and decrypt confidential data in a process in which the first security isolation entity and the second security isolation entity perform confidential communication.

S707: Perform S523: The first CPU updates the access control policy.

S708: Perform S524: The security management module on the side of the first CPU requests the security management module of the second AI accelerator to create a third security isolation entity on the side of the second AI accelerator.

S709: Perform S525 to create the third security isolation entity on the side of the second AT accelerator.

S710: Perform S526 to S531: The first CPU performs integrity measurement on the third security isolation entity on the side of the second AI accelerator.

S711: Perform S532 to S537: The second AI accelerator performs integrity measurement on the first security isolation entity on the side of the first CPU.

S712: Perform S538 to S541: The first CPU performs key agreement with the second AI accelerator to generate a second session key, encrypts the first session key by using the second session key, and sends the encrypted first session key to the security management module on the side of the second AI accelerator, so that the security management module stores the first session key in the security communication module on the side of the second AI accelerator.

The first session key is used to encrypt and decrypt confidential data in a process in which the first security isolation entity and the third security isolation entity perform confidential communication.

S713: The security management module on a side of the second CPU receives an instruction of a platform user, configures a computing resource on the side of the second CPU and a security attribute of the computing resource, sets an access control policy, and creates a fourth security isolation entity on the side of the second CPU.

The computing resource that is on the side of the second CPU and that is configured by the security management module on the side of the second CPU is used to create the fourth security isolation entity on the side of the second CPU. That the security management module configures the security attribute of the computing resource includes: The security management module sets a state of a resource slice to a secure state.

In this embodiment of this application, that the second CPU sets the access control policy specifically includes: The second CPU generates the access control policy, and configures the access control policy in a security communication module on the side of the second CPU.

The access control policy that is set by the second CPU includes a fifth outbound access permission table and a fifth inbound access permission table.

The fifth outbound access permission table is used to perform permission check on an access request for accessing the second security isolation entity by the fourth security isolation entity. In this case, an access address in the access request is a physical address of the first AI accelerator, the fifth outbound access permission table includes physical addresses of a plurality of AI accelerators and permission labels corresponding to the physical addresses, and the permission label indicates a permission or no permission. To be specific, when the fourth security isolation entity initiates an access request to a fifth security isolation entity (where the fifth security isolation entity is an isolation entity on the side of the first AI accelerator), the second CPU performs permission check on the physical address of the first AI accelerator in the access request based on the fifth outbound access permission table, and may send the access request if it is determined that the fourth security isolation entity has a permission.

The fifth inbound access permission table is used to perform permission check on an access request for accessing the fourth security isolation entity by the fifth security isolation entity. In this case, an access address in the access request is a physical address of the second CPU, and the fifth inbound access permission table includes physical addresses of a plurality of CPUs and permission labels corresponding to the physical addresses. To be specific, when the fifth security isolation entity initiates the access request to the fourth security isolation entity, after the access request reaches the second CPU (specifically, the security communication module on the side of the second CPU), the second CPU performs permission check on the physical address of the second CPU in the access request based on the fifth inbound access permission table. The fourth security isolation entity may receive the access request if it is determined that the fifth security isolation entity has a permission.

It may be understood that, after the security management module on the side of the second CPU configures the computing resource (including a computing power resource and a storage resource) on the side of the second CPU and the security attribute of the computing resource, the second CPU may run code of the fourth security isolation entity based on the configured computing resource, to create the fourth security isolation entity on the side of the second CPU.

S714: A trusted measurement module on the side of the second CPU requests the security management module to obtain a measurement value of the fourth security isolation entity.

S715: The fourth security isolation entity on the side of the second CPU interacts with the security management module to generate the measurement value of the fourth security isolation entity on the side of the second CPU.

S716: The security management module on the side of the second CPU sends the measurement value of the fourth security isolation entity on the side of the second CPU to the trusted measurement module.

S717: The trusted measurement module on the side of the second CPU interacts with the measurement value verification module to perform measurement value verification, to obtain a measurement value verification result.

S713 to S717 are a process in which the second CPU creates the fourth security isolation entity on the side of the second CPU and performs integrity measurement on the fourth security isolation entity.

S718: The security management module on the side of the second CPU requests the security management module of the first AI accelerator to create the fifth security isolation entity on the side of the first AI accelerator.

S719: The security management module on the side of the first AI accelerator configures a computing resource on the side of the first AI accelerator and a security attribute of the computing resource, sets an access control policy, and creates the fifth security isolation entity.

The computing resource configured by the security management module on the side of the first AI accelerator is used to create the second security isolation entity on the side of the first AI accelerator. That the security management module configures the security attribute of the computing resource includes: The security management module sets a state of a resource slice to the secure state.

In this embodiment of this application, that the first AI accelerator sets the access control policy specifically includes: The firstAI accelerator generates the access control policy, and configures the access control policy in the security communication module on the side of the firstAI accelerator.

The access control policy that is set by the firstAI accelerator includes a sixth outbound access permission table and a sixth inbound access permission table.

The sixth outbound access permission table is used to perform permission check on an access request for accessing the fourth security isolation entity by the fifth security isolation entity. In this case, an access address in the access request is the physical address of the second CPU, the sixth outbound access permission table includes physical addresses of a plurality of CPUs and permission labels corresponding to the physical addresses, and the permission label indicates a permission or no permission. To be specific, when the fifth security isolation entity initiates address access to the fourth security isolation entity, the first AI accelerator performs permission check on the physical address of the second CPU in the access request based on the sixth outbound access permission table, and may send the access request if it is determined that the fifth security isolation entity has a permission.

The sixth inbound access permission table is used to perform permission check on an access request for accessing the fifth security isolation entity by the fourth security isolation entity. In this case, an access address in the access request is the physical address of the firstAI accelerator, and the sixth inbound access permission table includes physical addresses of a plurality of AI accelerators and permission labels corresponding to the physical addresses. To be specific, when the fourth security isolation entity initiates the access request to the fifth security isolation entity, after the access request reaches the first AI accelerator (specifically, the security communication module of the firstAI accelerator), the firstAI accelerator performs permission check on the physical address of the first AI accelerator in the access request based on the sixth inbound access permission table. The fifth security isolation entity receives the access request if it is determined that the fourth security isolation entity has a permission.

S720: The trusted measurement module on the side of the second CPU requests the trusted measurement module on the side of the first AI accelerator to perform integrity measurement on the fifth security isolation entity on the side of the first AI accelerator.

S721: The trusted measurement module on the side of the first AI accelerator requests the security management module on the side of the first AI accelerator to obtain a measurement value of the fifth security isolation entity.

S722: The second security isolation entity on the side of the first AI accelerator interacts with the security management module on the side of the first AI accelerator to generate the measurement value of the fifth security isolation entity on the side of the first AI accelerator.

S723: The security management module on the side of the first AI accelerator sends the measurement value of the fifth security isolation entity on the side of the first AI accelerator to the trusted measurement module on the side of the first AI accelerator.

S724: The trusted measurement module on the side of the first AI accelerator sends the measurement value of the fifth security isolation entity on the side of the first AI accelerator to the trusted measurement module on the side of the second CPU.

S725: The trusted measurement module on the side of the second CPU interacts with the measurement value verification module to perform measurement value verification, to obtain an integrity verification result.

S720 to S725 are a process in which the second CPU performs integrity measurement on the fifth security isolation entity on the side of the first AI accelerator.

S726: The trusted measurement module on the side of the first AI accelerator requests the trusted measurement module on the side of the second CPU to perform integrity measurement on the fourth security isolation entity created on the side of the second CPU.

S727: The trusted measurement module on the side of the second CPU requests the security management module on the side of the second CPU to obtain a measurement value of the fourth security isolation entity.

S728: The fourth security isolation entity on the side of the second CPU interacts with the security management module on the side of the second CPU to generate the measurement value of the fourth security isolation entity on the side of the second CPU.

S729: The security management module on the side of the second CPU sends the measurement value of the fourth security isolation entity on the side of the second CPU to the trusted measurement module on the side of the second CPU.

S730: The trusted measurement module on the side of the second CPU sends the measurement value of the fourth security isolation entity on the side of the second CPU to the trusted measurement module on the side of the first AI accelerator.

S731: The trusted measurement module on the side of the first AI accelerator interacts with the measurement value verification module to perform measurement value verification, to obtain a measurement value verification result.

S726 to S731 are a process in which the first AI accelerator performs integrity measurement on the fourth security isolation entity on the side of the second CPU.

Through S713 to S731, the fourth security isolation entity on the side of the second CPU and the fifth security isolation entity on the side of the first AI accelerator are created, and the second CPU and the first AI accelerator respectively perform integrity measurement on the security isolation entities created by the first AI accelerator and the second CPU.

S732: The security management module on the side of the second CPU performs key agreement with the security management module on the side of the first AI accelerator to generate a third session key.

The third session key is used to encrypt and decrypt confidential data in a process in which the fourth security isolation entity and the fifth security isolation entity perform confidential communication.

S733: The security management module on the side of the second CPU stores the third session key in the security communication module on the side of the second CPU.

S734: The security management module on the side of the first AI accelerator stores the third session key in the security communication module on the side of the first AI accelerator.

In this embodiment of this application, the second CPU further interacts with the second AI accelerator to create a sixth security isolation entity on the side of the second AI accelerator. Details are as follows:

S735: The second CPU updates the access control policy.

In this embodiment of this application, that the second CPU updates the access control policy specifically includes: The second CPU generates an access control policy for communicating with the sixth security isolation entity on the side of the second AI accelerator, and configures the access control policy in the security communication module on the side of the second CPU.

An access control policy obtained through update by the second CPU includes a seventh outbound access permission table and a seventh inbound access permission table.

The seventh outbound access permission table is used to perform permission check on an access request for accessing the sixth security isolation entity (namely, the security isolation entity on the side of the second AI accelerator) by the fourth security isolation entity. In this case, an access address in the access request is a physical address of the second AI accelerator, the seventh outbound access permission table includes physical addresses of a plurality of AI accelerators and permission labels corresponding to the physical addresses, and the permission label indicates a permission or no permission. To be specific, when the fourth security isolation entity initiates the access request to the sixth security isolation entity, the second CPU perform permission check on the physical address of the second AI accelerator in the access request based on the seventh outbound access permission table, and may send the access request if it is determined that the fourth security isolation entity has a permission.

The seventh inbound access permission table is used to perform permission check on an access request for accessing the fourth security isolation entity by the sixth security isolation entity. In this case, the access address in the access request is the physical address of the second CPU, and the seventh inbound access permission table includes physical addresses of a plurality of CPUs and permission labels corresponding to the physical addresses. To be specific, when the sixth security isolation entity initiates the access request to the fourth security isolation entity, after the access request reaches the second CPU (specifically, the security communication module of the second CPU), the second CPU performs permission check on the physical address of the second CPU in the access request based on the seventh inbound access permission table. The fourth security isolation entity may receive the access request if it is determined that the sixth security isolation entity has a permission.

S736: The security management module on the side of the second CPU requests the security management module of the second AI accelerator to create the sixth security isolation entity on the side of the second AI accelerator.

Specifically, the security management module on the side of the second CPU sends a creation request to the security management module of the second AI accelerator. The creation request is used to request to create the sixth security isolation entity on the side of the second AI accelerator.

S737: The security management module on the side of the second AI accelerator configures a computing resource on the side of the second AI accelerator and a security attribute of the computing resource, sets an access control policy, and creates the third security isolation entity on the side of the second AI accelerator.

The computing resource that is on the side of the second AI accelerator and that is configured by the security management module on the side of the second AI accelerator is used to create the sixth security isolation entity on the side of the second AI accelerator. That the security management module on the side of the second AI accelerator configures the security attribute of the computing resource includes: The security management module sets a state of a resource slice to the secure state.

That the second AI accelerator sets the access control policy specifically includes: The second AI accelerator generates the access control policy, and configures the access control policy in the security communication module of the second AI accelerator.

The access control policy that is set by the second AI accelerator includes an eighth outbound access permission table and an eighth inbound access permission table.

The eighth outbound access permission table is used to perform permission check on an access request for accessing the fourth security isolation entity by the sixth security isolation entity. In this case, the access address in the access request is the physical address of the second CPU, the eighth outbound access permission table includes physical addresses of a plurality of CPUs and permission labels corresponding to the physical addresses, and the permission label indicates a permission or no permission. To be specific, when the sixth security isolation entity initiates address access to the fourth security isolation entity, the second AI accelerator performs permission check on the physical address of the second CPU in the access request based on the eighth outbound access permission table, and may send the access request if it is determined that the sixth security isolation entity has a permission.

The eighth inbound access permission table is used to perform permission check on an access request for accessing the sixth security isolation entity by the fourth security isolation entity. In this case, the access address in the access request is the physical address of the second AI accelerator, and the eighth inbound access permission table includes physical addresses of a plurality of AI accelerators and permission labels corresponding to the physical addresses. To be specific, when the fourth security isolation entity initiates the access request to the sixth security isolation entity, after the access request reaches the second AI accelerator (specifically, the security communication module on the side of the second AI accelerator), the second AI accelerator performs permission check on the physical address of the second AI accelerator in the access request based on the eighth inbound access permission table. The sixth security isolation entity may receive the access request if it is determined that the fourth security isolation entity has a permission.

S738: The trusted measurement module on the side of the second CPU requests the trusted measurement module on the side of the second AI accelerator to perform integrity measurement on the sixth security isolation entity on the side of the second AI accelerator.

Specifically, the trusted measurement module on the side of the second CPU sends a measurement request to the trusted measurement module on the side of the second AI accelerator, where the measurement request is used to request to perform integrity measurement on the sixth security isolation entity on the side of the second AI accelerator.

S739: The trusted measurement module on the side of the second AI accelerator requests the security management module on the side of the second AI accelerator to obtain a measurement value of the sixth security isolation entity.

S740: The sixth security isolation entity on the side of the second AI accelerator interacts with the security management module on the side of the second AI accelerator to generate the measurement value of the sixth security isolation entity on the side of the second AI accelerator.

S741: The security management module on the side of the second AI accelerator sends the measurement value of the sixth security isolation entity on the side of the second AI accelerator to the trusted measurement module on the side of the second AI accelerator.

S742: The trusted measurement module on the side of the second AI accelerator sends the measurement value of the sixth security isolation entity on the side of the second AI accelerator to the trusted measurement module on the side of the second CPU.

S743: The trusted measurement module on the side of the second CPU interacts with the measurement value verification module to perform measurement value verification, to obtain an integrity verification result.

S738 to S743 are a process in which the second CPU performs integrity measurement on the sixth security isolation entity on the side of the second AI accelerator.

S744: The trusted measurement module on the side of the second AI accelerator requests the trusted measurement module on the side of the second CPU to perform integrity measurement on the fourth security isolation entity on the side of the second CPU.

Specifically, the trusted measurement module on the side of the second AI accelerator sends a measurement request to the trusted measurement module on the side of the second CPU, where the measurement request is used to request to perform integrity measurement on the fourth security isolation entity on the side of the second CPU.

S745: The trusted measurement module on the side of the second CPU requests the security management module on the side of the second CPU to obtain a measurement value of the fourth security isolation entity.

S746: The fourth security isolation entity on the side of the second CPU interacts with the security management module on the side of the second CPU to generate the measurement value of the fourth security isolation entity on the side of the second CPU.

S747: The security management module on the side of the second CPU sends the measurement value of the fourth security isolation entity on the side of the second CPU to the trusted measurement module on the side of the second CPU.

S748: The trusted measurement module on the side of the second CPU sends the measurement value of the fourth security isolation entity on the side of the second CPU to the trusted measurement module on the side of the second AI accelerator.

S749: The trusted measurement module on the side of the second AI accelerator interacts with the measurement value verification module to perform measurement value verification, to obtain a measurement value verification result.

S744 to S749 are a process in which the second AI accelerator performs integrity measurement on the fourth security isolation entity on the side of the second CPU.

Through S735 to S749, the fourth security isolation entity on the side of the second CPU and the sixth security isolation entity on the side of the second AI accelerator are created, and the second CPU and the second AI accelerator respectively perform integrity measurement on the security isolation entities created by the second AI accelerator and the second CPU and.

S750: The security management module on the side of the second CPU performs key agreement with the security management module on the side of the second AI accelerator to generate a fourth session key.

The fourth session key may be referred to as a temporary session key.

S751: The security management module on the side of the second CPU encrypts the third session key by using the fourth session key.

S752: The security management module on the side of the second CPU sends the encrypted third session key to the security management module on the side of the second AI accelerator.

S753: The security management module on the side of the second AI accelerator stores the third session key in the security communication module on the side of the second AI accelerator.

The third session key is used to encrypt and decrypt confidential data in a process in which the second CPU performs confidential communication with the second AI accelerator based on the second security isolation entity.

In the foregoing embodiment, the first CPU, the second CPU, and the first AI accelerator are used as an example. The first CPU interacts with the first AI accelerator to create the first security isolation entity on the side of the first CPU and the second security isolation entity, and the first CPU and the first AI accelerator respectively perform integrity measurement on the security isolation entities created by the first AI accelerator and the first CPU. The second CPU interacts with the first AI accelerator to create the fourth security isolation entity on the side of the second CPU and the fifth security isolation entity on the side of the first AI accelerator, and the second CPU and the first AI accelerator respectively perform integrity measurement on the security isolation entities created by the first AI accelerator and the second CPU. It can be learned that for the first AI accelerator, some resources (one resource slice) of the first AI accelerator are used to create a security isolation entity corresponding to the first CPU (where the security isolation entity corresponding to the first CPU is a security isolation entity on the side of the first AI accelerator corresponding to the security isolation entity on the side of the first CPU), and the other resources (another resource slice) of the first AI accelerator are used to create a security isolation entity corresponding to the second CPU, that is, resources of one AI accelerator may be used to create security isolation entities corresponding to different CPUs, so that the resources of the AI accelerator can be appropriately used to improve resource utilization of the AI accelerator.

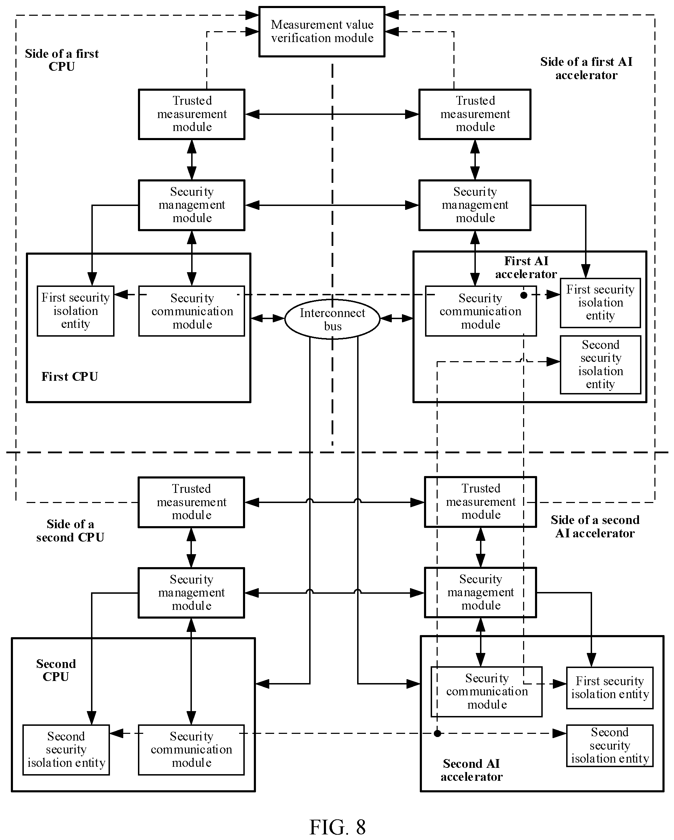

With reference to the flowchart of the method for creating a heterogeneous trusted execution environment shown in FIG. 7A and FIG. 7B, FIG. 8 is a diagram of interaction relationships between the modules of the first CPU, the second CPU, the first AI accelerator, and the second AI accelerator.

Optionally, in this embodiment of this application, for the security isolation entity created in the foregoing three cases, the created security isolation entity may be subsequently released according to a use requirement. After the security isolation entity is released, a corresponding resource slice may be reconfigured, to create another security isolation entity.

It should be noted that, in this embodiment of this application, the CPU initiates integrity measurement on the security isolation entity on the side of the AI accelerator, that is, after the security isolation entity corresponding to the side of the CPU is created on the side of the AI accelerator, the AI accelerator requests to perform integrity measurement on the security isolation entity on the side of the CPU. In a possible implementation, the AI accelerator may also actively initiate integrity measurement on the security isolation entity on the side of the CPU.

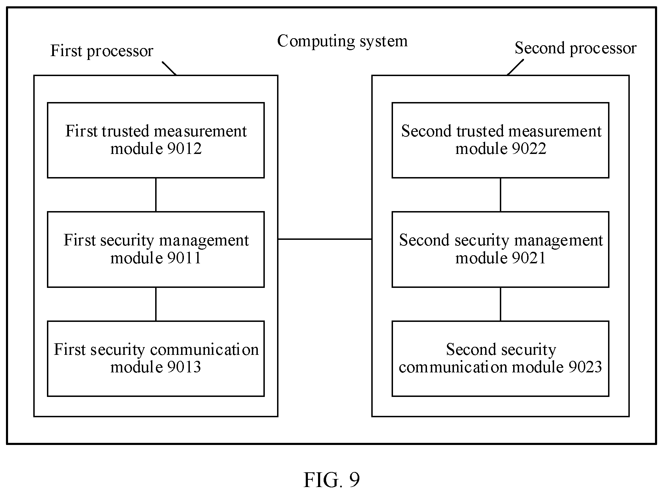

Correspondingly, an embodiment of this application provides a computing system. As shown in FIG. 9, the computing system device includes a first processor and a second processor that are heterogeneous, the first processor includes a first security management module 9011 and a first trusted measurement module 9012, and the second processor includes a second security management module 9021 and a second trusted measurement module 9022.

The first security management module 9011 is configured to perform S201, S202, S301, S303, S304, S306, S316, S317, S320, S321, S501, S503, S504, S506, S516, S517, S520, S521, S523, S524, S534, S535, S538, S539, S540, S701, S702, S706, S707, S708, and S712 in the foregoing method embodiments.

The first trusted measurement module 9012 is configured to perform S204, S2041, S2044, S302, S305, S308, S313, S315, S318, S502, S505, S508, S513, S515, S518, S526, S531, S533, S536, S701, S704, and S710 in the foregoing method embodiments.

The second security management module 9021 is configured to perform S203, S307, S310, S311, S322, S507, S510, S511, S522, S703, S706, S719, S722, S723, S732, and S734 in the foregoing method embodiments.

The second trusted measurement module 9022 is configured to perform S205, S2051, S2054, S309, S312, S314, S319, S509, S512, S514, S519, S705, S721, S724, S726, and S731 in the foregoing method embodiments.

Optionally, the first processor further includes a first security communication module 9013, and the second processor further includes a second security communication module 9023. The first security communication module 9013 is configured to receive an access control policy configured by the first security management module 9011 and a first session key. The second security communication module 9023 is configured to receive the access control policy configured by the second security management module 9021, the first session key, and a third session key.

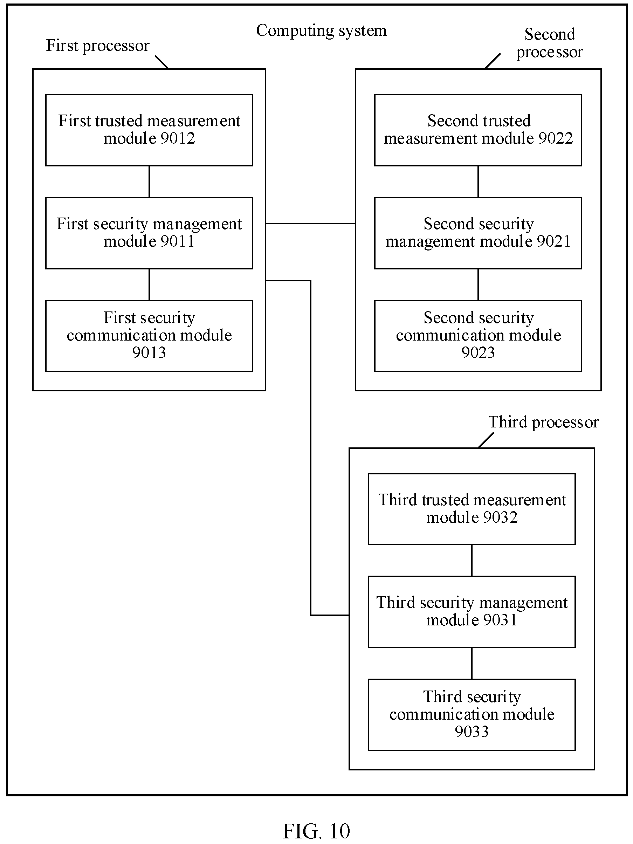

With reference to FIG. 9, as shown in FIG. 10, the computing system provided in this embodiment of this application further includes a third processor, and the third processor includes a third security management module 9031 and a third trusted measurement module 9032.

The third security management module 9031 is configured to perform S525, S528, S529, S538, S541, S709, S712, S737, S740, S741, S750, and S753 in the foregoing method embodiments.

The third trusted measurement module 9032 is configured to perform S527, S530, S532, S537, S541, S711, S739, S742, S744, and S749 in the foregoing method embodiments.

Optionally, the third processor further includes a third security communication module 9033. The third security communication module 9033 receives the access control policy configured by the third security management module 9031, the first session key, and the third session key.

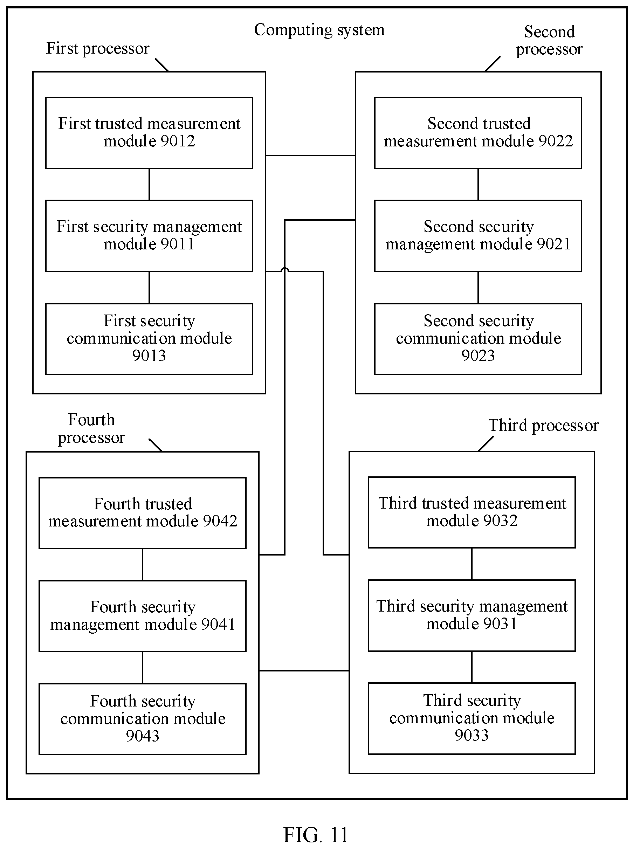

With reference to FIG. 10, as shown in FIG. 11, the computing system provided in this embodiment of this application further includes a fourth processor, and the fourth processor includes a fourth security management module 9041 and a fourth trusted measurement module 9042.

The fourth security management module 9041 is configured to perform S713, S715, S716, S718, S732, S728, S729, S732, S733, S735, S736, S746, S747, S750, S751, and S752 in the foregoing method embodiments.

The fourth trusted measurement module 9042 is configured to perform S714, S717, S720, S725, S727, S729, S730, S738, S743, S745, and S748 in the foregoing method embodiments.

Optionally, the fourth processor further includes a fourth security communication module 9043. The fourth security communication module 9043 is configured to receive the access control policy configured by the third security management module 9031 and the first session key.

An embodiment of this application provides a computing device, including a memory and at least one processor connected to the memory. The memory is configured to store computer program code, the computer program code includes computer instructions, and when the computer instructions are executed by the at least one processor, the computing device is enabled to perform the method in the foregoing embodiments.

An embodiment of this application provides a computer-readable storage medium, storing computer instructions. When the computer instructions are run on a computer, the method in the foregoing embodiments is performed.

An embodiment of this application provides a computer program product. The computer program product includes computer instructions. When the computer instructions are run on a computer, the method in the foregoing embodiment is performed.

An embodiment of this application provides a chip, including a memory and a processor. The memory is configured to store computer instructions, and the processor is configured to invoke the computer instructions from the memory and run the computer instructions, to perform the method in the foregoing embodiments.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a magnetic disk, or a magnetic tape), an optical medium (for example, a digital video disc (digital video disc, DVD)), a semiconductor medium (for example, a solid state drive (solid state drive, SSD)), or the like.

Through descriptions of the foregoing implementations, a person skilled in the art may clearly understand that, for the purpose of convenient and brief description, division of the foregoing functional modules is used as an example for descriptions. During actual application, the foregoing functions can be allocated to different modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A method for creating a heterogeneous trusted execution environment, applied to a computing device comprising a first processor and a second processor that are heterogeneous, wherein the method comprises:

creating, by the first processor, a first security isolation entity based on a computing resource of the first processor;

sending, by the first processor, a first creation request to the second processor;

creating, by the second processor, a second security isolation entity based on a computing resource of the second processor in response to the first creation request;

performing, by the first processor, integrity measurement on the second security isolation entity on a side of the second processor; and

performing, by the second processor, integrity measurement on the first security isolation entity on a side of the first processor.

2. The method according to claim 1, wherein the first processor is a central processing unit CPU, and the second processor is an artificial intelligence AI accelerator.

3. The method according to claim 1 or 2, wherein the method further comprises:
setting, by the first processor, an access control policy, wherein the access control policy comprises a first outbound access permission table and a first inbound access permission table, the first outbound access permission table is used to perform permission check on an access request for accessing the second security isolation entity by the first security isolation entity, and the first inbound access permission table is used to perform permission check on an access request for accessing the first security isolation entity by the second security isolation entity.

4. The method according to any one of claims 1 to 3, wherein the method further comprises:
setting, by the second processor, an access control policy, wherein the access control policy comprises a second outbound access permission table and a second inbound access permission table, the second outbound access permission table is used to perform permission check on an access request for accessing the first security isolation entity by the second security isolation entity, and the second inbound access permission table is used to perform permission check on an access request for accessing the second security isolation entity by the first security isolation entity.

5. The method according to any one of claims 1 to 4, wherein performing, by the first processor, integrity measurement on the second security isolation entity on the side of the second processor comprises:

sending, by the first processor, a first measurement request to the second processor, wherein the first measurement request is used to request to measure integrity of the second security isolation entity on the side of the second processor;

sending, by the second processor, a first measurement value to the first processor, wherein the first measurement value is a measurement value of the second security isolation entity on the side of the second processor; and

performing, by the first processor, integrity measurement on the second security isolation entity on the side of the second processor based on the first measurement value.

6. The method according to any one of claims 1 to 5, wherein performing, by the second processor, integrity measurement on the first security isolation entity on the side of the first processor comprises:

sending, by the second processor, a second measurement request to the first processor, wherein the second measurement request is used to request to measure integrity of the first security isolation entity on the side of the first processor;

sending, by the first processor, a second measurement value to the second processor, wherein the second measurement value is a measurement value of the first security isolation entity on the side of the first processor; and

performing, by the second processor, integrity measurement on the first security isolation entity on the side of the first processor based on the second measurement value.

7. The method according to any one of claims 1 to 6, wherein the method further comprises:
performing, by the first processor, key agreement with the second processor to generate a first session key, wherein the first session key is used to encrypt and decrypt confidential data in a confidential communication process.

8. The method according to any one of claims 1 to 7, wherein

the computing resources of the first processor and the second processor are divided into a plurality of resource slices, wherein the plurality of resource slices comprise a secure-state resource slice and a non-secure-state resource slice; and

computing resources used to create the first security isolation entity and the second security isolation entity are secure-state resource slices.

9. The method according to any one of claims 1 to 8, wherein the computing device further comprises a third processor, and the method further comprises:

creating, by the third processor, a third security isolation entity;

performing, by the first processor, integrity measurement on the third security isolation entity on a side of the third processor; and

performing, by the third processor, integrity measurement on the first security isolation entity on the side of the first processor.

10. The method according to claim 9, wherein the third processor is an AI accelerator.

11. The method according to claim 9 or 10, wherein the method further comprises:

performing, by the first processor, key agreement with the third processor to generate a second session key;

encrypting, by the first processor, the first session key by using the second session key; and

sending, by the first processor, the encrypted first session key to the third processor.

12. The method according to claim 11, wherein the computing device further comprises a fourth processor;

the fourth processor creates a fourth security isolation entity;

the second processor creates a fifth security isolation entity;

the fourth processor performs integrity measurement on the fifth security isolation entity on the side of the second processor; and

the second processor performs integrity measurement on the fourth security isolation entity on a side of the fourth processor.

13. The method according to claim 12, wherein the method further comprises:

creating, by the third processor, a sixth security isolation entity;

performing, by the fourth processor, integrity measurement on the sixth security isolation entity on the side of the third processor; and

performing, by the third processor, integrity measurement on the fourth security isolation entity on the side of the fourth processor

14. The method according to claim 12 or 13, wherein the fourth processor is a CPU.

15. The method according to any one of claims 12 to 14, wherein the method further comprises:

performing, by the fourth processor, key agreement with the second processor to generate a third session key, wherein the third session key is used to encrypt and decrypt confidential data in a confidential communication process;

performing, by the fourth processor, key agreement with the third processor to generate a fourth session key;

encrypting, by the fourth processor, the third session key by using the fourth session key; and

sending, by the fourth processor, the encrypted third session key to the third processor

16. The method according to any one of claims 1 to 15, wherein the method further comprises:

releasing, by the first processor, the first security isolation entity;

sending, by the first processor, a release instruction to the second processor, wherein the release instruction instructs to release the second security isolation entity that is on the side of the second processor and that communicates with the first security isolation entity; and

releasing, by the second processor, the second security isolation entity in response to the release instruction.

17. A computing system, comprising a first processor and a second processor that are heterogeneous, wherein the first processor comprises a first security management module and a first trusted measurement module, and the second processor comprises a second security management module and a second trusted measurement module;

the first security management module is configured to create a first security isolation entity based on a computing resource of the first processor, and send a first creation request to the second security management module;

the second security management module is configured to create a second security isolation entity based on a computing resource of the second processor in response to the first creation request;

the first trusted measurement module is configured to perform integrity measurement on the second security isolation entity on a side of the second processor; and

the first trusted measurement module is configured to perform integrity measurement on the first security isolation entity on a side of the first processor

18. The computing system according to claim 17, wherein

the first security management module is further configured to set an access control policy, wherein the access control policy comprises a first outbound access permission table and a first inbound access permission table, the first outbound access permission table is used to perform permission check on an access request for accessing the second security isolation entity by the first security isolation entity, and the first inbound access permission table is used to perform permission check on an access request for accessing the first security isolation entity by the second security isolation entity.

19. The computing system according to claim 17 or 18, wherein
the second security management module is further configured to set an access control policy, wherein the access control policy comprises a second outbound access permission table and a second inbound access permission table, the second outbound access permission table is used to perform permission check on an access request for accessing the first security isolation entity by the second security isolation entity, and the second inbound access permission table is used to perform permission check on an access request for accessing the second security isolation entity by the first security isolation entity.

20. The computing system according to any one of claims 17 to 19, wherein

   the first trusted measurement module is specifically configured to send a first measurement request to the second trusted measurement module, wherein the first measurement request is used to request to measure integrity of the second security isolation entity on the side of the second processor;
   the second trusted measurement module is further configured to send a first measurement value to the first trusted measurement module, wherein the first measurement value is a measurement value of the second security isolation entity on the side of the second processor; and
   the first trusted measurement module is specifically configured to perform integrity measurement on the second security isolation entity on the side of the second processor based on the first measurement value.

21. The computing system according to any one of claims 17 to 20, wherein

   the second trusted measurement module is specifically configured to send a second measurement request to the first trusted measurement module, wherein the second measurement request is used to request to measure integrity of the first security isolation entity on the side of the first processor;

the first trusted measurement module is further configured to send a second measurement value to the second trusted measurement module, wherein the second measurement value is a measurement value of the first security isolation entity on the side of the first processor; and
the second trusted measurement module is specifically configured to perform integrity measurement on the first security isolation entity on the side of the first processor based on the second measurement value.

22. The computing system according to any one of claims 17 to 21, wherein
the first security management module is configured to perform key agreement with the second security management module to generate a first session key, wherein the first session key is used to encrypt and decrypt confidential data in a confidential communication process.

23. The computing system according to any one of claims 17 to 22, wherein the computing system further comprises a third processor, and the third processor comprises a third security management module and a third trusted measurement module;

   the third security management module is configured to create a third security isolation entity;
   the first trusted measurement module is further configured to perform integrity measurement on the third security isolation entity on a side of the third processor; and
   the third trusted measurement module is configured to perform integrity measurement on the first security isolation entity on the side of the first processor

24. The computing system according to claim 23, wherein

   the third security management module is configured to perform key agreement with the first security management module to generate a second session key; and
   the first security management module is further configured to encrypt the first session key by using the second session key, and send the encrypted first session key to the third security management module.

25. The computing system according to claim 24, wherein the computing system further comprises a fourth processor, and the fourth processor comprises a fourth security management module and a fourth trusted measurement module;

   the fourth security management module is configured to create a fourth security isolation entity;

the second security management module is further configured to create a fifth security isolation entity;

the fourth trusted measurement module is configured to perform integrity measurement on the fifth security isolation entity on the side of the second processor; and

the second trusted measurement module is further configured to perform integrity measurement on the fourth security isolation entity on a side of the fourth processor

26. The computing system according to claim 25, wherein

the third security management module is further configured to create a sixth security isolation entity;

the fourth trusted measurement module is further configured to perform integrity measurement on the sixth security isolation entity on the side of the third processor; and

the third trusted measurement module is further configured to perform integrity measurement on the fourth security isolation entity on the side of the fourth processor

27. The computing system according to claim 25 or 26, wherein

the fourth security management module is configured to perform key agreement with the second security management module to generate a third session key, wherein the third session key is used to encrypt and decrypt confidential data in a confidential communication process; and

the fourth security management module is further configured to: perform key agreement with the third security management module to generate a fourth session key; encrypt the third session key by using the fourth session key; and send the encrypted third session key to the third processor

28. The computing system according to any one of claims 17 to 27, wherein

the first security management module is further configured to release the first security isolation entity, and send a release instruction to the second processor, wherein the release instruction instructs to release the second security isolation entity that is on the side of the second processor and that communicates with the first security isolation entity; and

the second security management module releases the second security isolation entity in response to the release instruction.

29. A computing device, comprising a memory and at least one processor connected to the memory, wherein the memory is configured to store computer program code, the computer program code comprises computer instructions, and when the computer instructions are executed by the at least one processor, the computing device is enabled to perform the method according to any one of claims 1 to 16.

30. A computer-readable storage medium, storing computer instructions, wherein when the computer instructions are run on a computer, the method according to any one of claims 1 to 16 is performed.

FIG. 1

FIG. 2

FIG. 3A

EP 4 603 996 A1

S306: Request to create a second security isolation entity

Configure a computing resource and a security attribute of the computing resource

S307

Set an access control policy

S308: Request to perform integrity measurement on the second security isolation entity

S309: Request to obtain a measurement value of the second security isolation entity

S310: Calculate the measurement value

S311: Send the measurement value

S312: Send the measurement value of the second security isolation entity

FIG. 3B

EP 4 603 996 A1

S313: Measurement
value verification

S314: Request to perform integrity measurement on the
first security isolation entity

S315:
Request to
obtain a
measurement
value of the
first security
isolation
entity

S316:
Calculate the
measurement
value

S317: Send
the
measurement
value

S318: Send the measurement value of the first security
isolation entity

S319: Measurement
value verification

S320: Perform key agreement to generate a first session key

S321: Store the first
session key

S322: Store the first
session key

FIG. 3C

EP 4 603 996 A1

**Side of a first CPU**

**Side of a first AI accelerator**

Measurement value verification module

Trusted measurement module

Trusted measurement module

Security management module

Security management module

**First CPU**

First security isolation entity

Security communication module

Interconnect bus

**First AI accelerator**

Security communication module

First security isolation entity

FIG. 4

Side of a first CPU | Side of a first AI accelerator | Side of a second AI accelerator

| First security isolation entity | Security management module | Trusted measurement module | Security communication module | Security communication module | Trusted measurement module | Security management module | First security isolation entity | Security communication module | Trusted measurement module | Security management module | First security isolation entity |

S501 to S505: Create the first security isolation entity

S506: Request to create a second security isolation entity

S507: Create the second security isolation entity

S508 to S513: The first CPU performs integrity measurement on the second security isolation entity on the side of the first AI accelerator

S514 to S519: The first AI accelerator performs integrity measurement on the first security isolation entity on the side of the first CPU

S520: Perform key agreement to generate a first session key

S521: Store the first session key

S522: Store the first session key

S523: Update an access control policy

S524: Request to create a third security isolation entity

Configure a computing resource and a security attribute of the computing resource }S525

Set an access control policy

S526: Request to perform integrity measurement on the second security isolation entity

S527: Request to obtain a measurement value of the second security isolation entity

S528: Calculate the measurement value

TO FIG. 5B

TO FIG. 5B

FIG. 5A

EP 4 603 996 A1

S529: Send the measurement value

S530: Send the measurement value of the second security isolation entity

S531: Interact with a measurement value verification module to perform measurement value verification

S532: Request to perform integrity measurement on the first security isolation entity

S533: Request to obtain a measurement value of the first security isolation entity

S534: Calculate the measurement value

S535: Send the measurement value

S536: Send the measurement value of the first security isolation entity

S537: Interact with a measurement value verification module to perform measurement value verification

S538: Perform key agreement to generate a second session key

S539: Encrypt the first session key by using the second session key

S540: Send the encrypted first session key

S541: Store the first session key

EP 4 603 996 A1

FIG. 5B

EP 4 603 996 A1

Side of a first
CPU

Side of a first AI
accelerator

Measurement value
verification module

Trusted measurement
module

Trusted measurement
module

Security management
module

Security management
module

**First CPU**

First security
isolation entity

Security
communication module

Interconnect
bus

**First AI
accelerator**

Security
communication module

First security
isolation entity

Trusted measurement
module

Side of a second AI
accelerator

Security management
module

**Second AI
accelerator**

Security
communication module

First security
isolation entity

FIG. 6

EP 4 603 996 A1

Side of a first CPU | Side of a first AI accelerator | Side of a second AI accelerator | Side of a second CPU

| First security isolation entity | Security management module | | Security management module | First security isolation entity | Second security isolation entity | | Security management module | First security isolation entity | Second security isolation entity | | Security management module | Second security isolation entity |

S701: Create the first security isolation entity

S702: Request to create the second security isolation entity

S703: Create the second security isolation entity

S704: The first CPU performs integrity measurement on the second security isolation entity

S705: The first AI accelerator performs integrity measurement on the first security isolation entity

S706: Perform key agreement to generate a first session key, and store the first session key

S707: Update an access control policy

S708: Request to create a third security isolation entity

S709: Create the third security isolation entity

S710: The first CPU performs integrity measurement on the third security isolation entity

S711: The first AI accelerator performs integrity measurement on the first security isolation entity

TO FIG. 7B

TO FIG. 7B

FIG. 7A

S712: Perform key agreement to generate a second session key, encrypt the first session key by using the second session key, and send the encrypted first session key to the second AI accelerator

S713 to S717: Create a fourth security isolation entity

S718: Request to create a fifth security isolation entity

S719: Create the fifth security isolation entity

S720 to S725: The second CPU performs integrity measurement on the fifth security isolation entity

S726 to S731: The first AI accelerator performs integrity measurement on the fourth security isolation entity

S732 to S734: Perform key agreement to generate a third session key, and store the third session key

S735: Update an access control policy

S736: Request to create a sixth security isolation entity

S737: Create the sixth security isolation entity

S738 to S743: The second CPU performs integrity measurement on the sixth security isolation entity

S744 to S749: The second AI accelerator performs integrity measurement on the fourth security isolation entity

S750 to S753: Perform key agreement to generate a fourth session key, encrypt the third session key by using the fourth session key, and send the encrypted third session key to the second AI accelerator

FIG. 7B

FIG. 8

Computing system

First processor

Second processor

First trusted measurement
module 9012

Second trusted measurement
module 9022

First security management
module 9011

Second security management
module 9021

First security communication
module 9013

Second security
communication module 9023

FIG. 9

FIG. 10

Computing system

First processor

Second processor

First trusted measurement module 9012

First security management module 9011

First security communication module 9013

Second trusted measurement module 9022

Second security management module 9021

Second security communication module 9023

Fourth processor

Third processor

Fourth trusted measurement module 9042

Fourth security management module 9041

Fourth security communication module 9043

Third trusted measurement module 9032

Third security management module 9031

Third security communication module 9033

FIG. 11

## INTERNATIONAL SEARCH REPORT

| International application No. |
| --- |
| **PCT/CN2023/121076** |

### A. CLASSIFICATION OF SUBJECT MATTER

G06F 21/57(2013.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 隔离, 可信执行环境, 完整性度量, 权限, isolat+, trusted execution environment, integrity measurement, right

### C. DOCUMENTS CONSIDERED TO BE RELEVANT

| Category* | Citation of document, with indication, where appropriate, of the relevant passages | Relevant to claim No. |
| --- | --- | --- |
| X | CN 107111715 A (INTEL CORP.) 29 August 2017 (2017-08-29) description, paragraphs [0012]-[0064], and figures 1-6 | 1-30 |
| A | CN 115344871 A (SHANGHAI JIAO TONG UNIVERSITY) 15 November 2022 (2022-11-15) entire document | 1-30 |
| A | US 2016036826 A1 (MCAFEE, INC.) 04 February 2016 (2016-02-04) entire document | 1-30 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 December 2023** | **26 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/121076**

| Patent document cited in search report | | | Publication date (day/month/year) | Patent family member(s) | | | Publication date (day/month/year) |
|---|---|---|---|---|---|---|---|
| CN | 107111715 | A | 29 August 2017 | US | 2018189482 | A1 | 05 July 2018 |
| | | | | US | 10169574 | B2 | 01 January 2019 |
| | | | | US | 2016171248 | A1 | 16 June 2016 |
| | | | | US | 9940456 | B2 | 10 April 2018 |
| | | | | WO | 2016122751 | A2 | 04 August 2016 |
| | | | | WO | 2016122751 | A3 | 13 October 2016 |
| | | | | EP | 3235161 | A2 | 25 October 2017 |
| | | | | EP | 3235161 | A4 | 13 June 2018 |
| | | | | EP | 3235161 | B1 | 01 April 2020 |
| | | | | CN | 107111715 | B | 10 November 2020 |
| CN | 115344871 | A | 15 November 2022 | | None | | |
| US | 2016036826 | A1 | 04 February 2016 | WO | 2016018502 | A1 | 04 February 2016 |
| | | | | EP | 3175575 | A1 | 07 June 2017 |
| | | | | EP | 3175575 | A4 | 28 March 2018 |
| | | | | EP | 3175575 | B1 | 10 April 2019 |

Form PCT/ISA/210 (patent family annex) (July 2022)

**EP 4 603 996 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211571870
- CN 202310382703